# EUROPÄISCHE PATENTSCHRIFT

(11) **EP 2 167 283 B1**
(45) Veröffentlichungstag und Bekanntmachung des Hinweises auf die Patenterteilung: **22.06.2011**
(21) Anmeldenummer: 08735207.6
(22) Anmeldetag: 11.04.2008
(51) Int. Cl.: B25C 1/18, B25C 5/16, B27F 7/00, B27F 7/13, B27F 7/02, B21J 15/32, B23P 19/00, B65G 51/02

(54) **ZUFÜHREINRICHTUNG, SETZGERÄT UND VERFAHREN ZUM ZUFÜHREN UND FÜGEN VON BEFESTIGUNGSELEMENTEN**
FEEDING DEVICE, PLACING DEVICE AND METHOD FOR FEEDING AND PLACING FASTENING ELEMENTS
DISPOSITIF D'ALIMENTATION, APPAREIL DE PLACEMENT ET PROCÉDÉ D'ALIMENTATION ET DE PLACEMENT D'ÉLÉMENTS DE FIXATION

(30) Priorität: 14.04.2007 DE 102007017689
(43) Veröffentlichungstag der Anmeldung: 31.03.2010
(73) Patentinhaber: Böllhoff Verbindungstechnik GmbH, 33649 Bielefeld (DE)
(72) Erfinder: DRAHT, Torsten, 33758 Schloss Holte (DE); HAESLER, Bernd, 33790 Halle/Westfallen (DE); LANG, Hans-Jörg, 83224 Staudach (DE); SPILLER-BOHNENKAMP, Iris, 33611 Bielefeld (DE)
(74) Vertreter: Heyer, Volker
(86) Internationale Anmeldenummer: PCT/EP2008/002924
(87) Internationale Veröffentlichungsnummer: WO 2008/125311

(56) Entgegenhaltungen:
- EP-A- 0 068 857
- EP-A- 0 567 240
- EP-A- 0 835 726
- EP-A- 0 987 086
- EP-A- 1 369 214
- EP-A2- 0 526 138
- AU-B- 622 995
- CA-A- 2 273 711
- DE-A1- 19 740 070
- DE-C- 63 363
- GB-A- 647 987
- GB-A- 2 003 074
- US-A- 2 879 509
- US-A- 2 890 913
- US-A- 2 901 749
- US-A- 3 049 713
- US-A- 3 743 158
- US-A- 3 982 679
- US-A- 4 015 746
- US-A- 4 099 324
- US-A- 5 004 141
- US-A1- 2007 017 953

## Beschreibung

### 1. Gebiet der Erfindung

Die vorliegende Erfindung betrifft eine Zuführvorrichtung zum Zuführen von Befestigungselementen innerhalb eines Setzgeräts gemäß dem Oberbegriff des Patentanspruchs 1, ein Setzgerät in Verbindung mit einer solchen Zuführeinrichtung zum Fügen von Befestigungselementen, insbesondere zum Setzen von Bolzen, Nieten, Stanznieten und Nägeln und Verfahren mit einer solchen Zuführeinrichtung.

Eine derartige Zuführvorrichtung und ein derartiges Setzgerät geht beispielsweise aus der DE 63363 hervor.

### 2. Hintergrund der Erfindung

Im Stand der Technik sind verschiedene Konstruktionen von Setzgeräten bekannt. Diese dienen dem Fügen von Nieten, Bolzen oder anderen Elementen, die zusammenfassend als Befestigungselemente bezeichnet werden. Je nach Bauart und Anwendungsbereich arbeiten die Setzgeräte mit unterschiedlichen Zuführvorrichtungen für die jeweiligen Befestigungselemente. Ein Beispiel für ein derartiges Setzgerät ist in der DE 20 2006 016 504 beschrieben. Mit Hilfe dieser Vorrichtung werden beispielsweise Bolzen mit einer hohen Frequenz in ein Werkstück eingetrieben.

Die Zufuhr von Befestigungselementen zu dem jeweiligen Setzgerät wird im Stand der Technik auf unterschiedliche Weise realisiert. Gemäß einer Alternative werden die Befestigungselemente mit Hilfe der Kraft einer Feder aus einem Magazin in den Zuführkanal oder in die Nähe des Zuführkanals des Setzgeräts geschoben. Von dort erfolgt der Fügevorgang des Befestigungselements mit Hilfe des Stempels des Setzgeräts. Es ist ebenfalls bekannt, die Befestigungselemente mit Hilfe eines Trägerbands zuzuführen. In derartigen Trägerbändern sind die Befestigungselemente hintereinander in gleichmäßig beabstandeten Haltepositionen gehalten. Innerhalb des Setzgeräts werden die Befestigungselemente aus der Halteposition entfernt, um dem Stempel zum Fügen zugeführt zu werden.

Bei den aus dem Stand der Technik bekannten Zuführvorrichtungen und -verfahren ist von Nachteil, dass die Befestigungselemente häufig nicht mit der geforderten Lagegenauigkeit oder der gewünschten Frequenz zuführbar sind. Es ist ebenfalls nachteilig, zur Unterstützung der Positionierung der Befestigungselemente eine Rondelle einzusetzen, da diese zusätzlichen Herstellungsaufwand und damit Kosten bewirkt. Allgemein behindern daher verschiedene Aspekte den Ablauf des Fügevorgangs, was zu einem Zeitverlust und zusätzlichen Kosten führt.

US 4,099,324 beschreibt eine Vorrichtung zum Zuführen und Einsetzen von Stiften in eine Leiterplatte. Basierend auf diesem Zufuhrmechanismus ist es möglich, diese Stifte in sequentieller Weise zuzuführen.

DE 63363 beschreibt eine Nagelmaschine. Die Nägel sind in einer Vielzahl von Löchern einer Scheibe aufgenommen, die im Kreis in dieser Scheibe angeordnet sind. Diese Scheibe wird schrittweise gedreht, so dass die Öffnungen mit den einzelnen Nägeln einzeln einem bewegbaren Stempel zuführbar sind. Während das zu nagelnde Werkstück vor der Scheibe angeordnet ist, bewegt sich der Stempel beim Nageln durch eine der Öffnungen der Scheibe, um den dort gehaltenen Nagel in das Werkstück zu fügen.

Es ist daher die Aufgabe der vorliegenden Erfindung, eine Zuführvorrichtung, einen Zufuhrkanal, ein Setzgerät mit diesen Komponenten und ein Verfahren zum Zuführen von Befestigungselementen bereitzustellen, mit denen die Nachteile aus dem Stand der Technik überwunden werden.

### 3. Zusammenfassung der Erfindung

Die obige Aufgabe wird durch eine Zuführvorrichtung gemäß dem unabhängigen Patentanspruch 1, durch ein Setzgerät gemäß dem unabhängigen Patentanspruch 12, durch ein Verfahren zum Zuführen von Befestigungselementen gemäß dem unabhängigen Patentanspruch 15 und ein Verfahren zum Fügen von Befestigungselementen gemäß den unabhängigen Patentansprüchen 16 und 20 gelöst. Vorteilhafte Ausgestaltungen und Weiterentwicklungen der vorliegenden Erfindung gehen aus der folgenden Beschreibung, den begleitenden Zeichnungen und den anhängenden Ansprüchen hervor.

Die erfindungsgemäße Zuführvorrichtung, mit der in einem Träger gehaltene Befestigungselemente, insbesondere Nieten, Bolzen, Nägel, einem Setzgerät zuführbar sind, während der Träger gleichmäßig beabstandete Haltepositionen der Befestigungselemente aufweist, umfasst die folgenden Merkmale: einen Schlitten, der in eine Vorschubposition und in eine Grundposition bewegbar ist, einen Vorschubarm, dessen erstes Ende am Schlitten schwenkbar befestigt ist und dessen zweites Ende am Träger angreift, so dass die Bewegung des Schlittens auf den Träger übertragbar ist, wodurch ein Befestigungselement in einer Zufuhrposition unterhalb eines Stempels des Setzgeräts positionierbar ist.

Innerhalb der Zuführvorrichtung wird durch eine vorzugsweise lineare Bewegung des Schlittens ein Träger mit Befestigungselementen schrittweise weiterbewegt. Die Schrittgröße dieser Bewegung umfasst jeweils den Abstand von zwei benachbarten Haltepositionen von Befestigungselementen. Auf diese Weise wird mit jedem Schritt ein neues Befestigungselement einer Zufuhrposition unterhalb des Stempels zugeführt. Die lineare Bewegung des Schlittens wird mit Hilfe des Vorschubarms auf den Träger übertragen. Dieser greift seitlich am Träger an, so dass durch eine zumindest in eine Bewegungsrichtung formschlüssige Verbindung zwischen Schlitten und Träger der Träger weiterbewegt werden kann. Sobald das Befestigungselement durch die Bewegung des Trägers die Zufuhrposition erreicht hat, besteht einerseits die Möglichkeit, dass der sich in Richtung Fügestelle bewegende Stempel das Befestigungselement aus dem Träger herauslöst. Des Weiteren besteht die Möglichkeit, dass das Befestigungselement durch die Schwerkraft, Druckluft oder andere Einwirkungen an der Zufuhrposition aus dem Träger herausgelöst und in den Zuführkanal des Setzgeräts freigegeben wird. Eine derart konstruierte Zuführvorrichtung ermöglicht die Zufuhr von Befestigungselementen mit hoher Frequenz, während mit Hilfe des verwendeten Trägers Befestigungselemente problemlos nachführbar sind.

Gemäß einer bevorzugten Ausgestaltung der Zuführvorrichtung ist der Schlitten mit Hilfe eines pneumatisch betriebenen Kolben-Zylinder-Antriebs linear bewegbar. Gemäß einer weiteren Alternative ist der pneumatisch betriebene Kolben-Zylinder-Antrieb getaktet, um ihn optimal auf die Fügebewegungen des Stempels oder allgemein des Setzgeräts anpassen zu können. Zudem ist dieser Antrieb unabhängig von der Bewegung des Stempels des Setzgeräts betreibbar. Eine weitere Alternative besteht darin, den pneumatischen Kolben-Zylinder-Antrieb mit Hilfe der Rückholluft eines ebenfalls pneumatisch betriebenen Stempels eines Setzgeräts zu betreiben. In diesem Zusammenhang sind aber auch andere Stellelemente für den Schlitten anwendbar, wie beispielsweise elektromagnetische, piezokeramische oder rein mechanische Antriebe.

Um den kontrollierten Vorschub des Trägers zu realisieren, ist der Schlitten der Zuführvorrichtung in der Vorschubposition in Richtung der Grundposition durch eine Feder vorgespannt, so dass durch die Federvorspannung der Schlitten in die Grundposition bewegbar und der Träger mittels der Bewegung des Schlittens um eine Halteposition versetzbar ist. Dies beinhaltet, dass aufgrund der durch die Federvorspannung realisierten Bewegung des Schlittens von der Vorschubposition in die Grundposition der Träger um eine Halteposition mit Befestigungselement weiterbewegt wird. Dadurch wird nach einem Fügevorgang die Zufuhr des nächsten Befestigungselements innerhalb des Trägers zur Fügeposition des Setzgeräts sichergestellt.

Gemäß der Ausführungsform ist ein am Gehäuse befestigte schwenkbare Blockierarm vorgesehen, der derart am Träger angreift, dass eine Bewegung des Trägers während der Bewegung des Schlittens aus der Grundposition in die Vorschubposition verhindert ist. Eine andere Alternative besteht darin, dass der sich während des Fügens durch eine im Träger befindliche Öffnung erstreckende Stempel des Setzgeräts das Blockiermittel für den Träger während der Bewegung des Schlittens bildet. Gemäß einer weiteren Ausführungsform ist der verwendete Träger mit einer Reibungsbremse ausgestattet, so dass bei Vorschub des Trägers dieser nicht übermäßig beschleunigt wird. Als Reibungsbremse wirkt beispielsweise eine Feder, die den Träger gegen ein Gehäuse des Setzgeräts drückt. Dadurch wird aufgrund von Reibung zwischen Träger und Gehäuse die Bewegung des Trägers nur soviel verlangsamt oder behindert, dass sich der Träger angepasst an seine Zufuhrfunktion der Befestigungselemente bewegt. Eine derartige Reibungsbremse wirkt beispielsweise der Eigenträgheit des Trägers entgegen, um eine übermäßige Beschleunigung des Trägers bei einer Vorschubbewegung zu dämpfen.

Gemäß unterschiedlicher Alternativen der vorliegenden Erfindung wird der Träger der Zuführvorrichtung durch ein Streifenmagazin mit hintereinander angeordneten Haltepositionen oder durch ein ringförmiges Rotationsmagazin mit in Umfangsrichtung des Rotationsmagazins angeordneten Haltepositionen gebildet.

Während die Haltepositionen im Streifenmagazin durch Öffnungen gebildet werden, in denen zumindest ein Teil des Befestigungselements gehalten wird, umfasst das Rotationsmagazin an den Haltepositionen jeweils eine Kammer, in denen lagerichtig jeweils ein Befestigungselement aufnehmbar ist. Um diese Kammern an den Haltepositionen des Rotationsmagazins nach unten zu verschließen, ist das Rotationsmagazin auf einer Platte angeordnet, während an mindestens einer Zufuhrposition die Platte eine Öffnung aufweist, durch die die Befestigungselemente aus der Kammer abführbar sind. Da diese Öffnung bzw. die Zufuhrposition bevorzugt direkt über dem Zuführkanal des Setzgeräts angeordnet ist, fällt das jeweilige Befestigungselement direkt aus dem Rotationsmagazin in den Zuführkanal oder wird durch Pressluft, einen Impuls oder einen anderen Einfluss gezielt aus dem Rotationsmagazin in den Zuführkanal des Setzgeräts gedrückt. Daher besteht ebenfalls die Möglichkeit, dass der Stempel des Setzgeräts durch die Öffnung in der Platte an der Zufuhrposition bewegbar ist, um das Befestigungselement zunächst aus der Kammer in den Zuführkanal zu bewegen und nachfolgend zu fügen. Durch die Drehung des Rotationsmagazins und die Positionierung einer Kammer an der Zufuhrposition wird somit die Kammer Bestandteil oder Verlängerung des Zuführkanals, d.h. die Kammer ist koaxial mit dem Zuführkanal ausgerichtet.

Des Weiteren ist das Rotationsmagazin bevorzugt mit einer Deckplatte abgedeckt, so dass die Kammern durch die Platte an einer Oberseite des Rotationsmagazins verschlossen sind. An mindestens einer Ladeposition weist diese Deckplatte eine Öffnung auf, durch die die Befestigungselemente der Kammer und somit dem Rotationsmagazin zuführbar sind. Da Zuführposition und Ladeposition an unterschiedlichen Stellen bezogen auf den Umfang des Rotationsmagazins angeordnet sind, also die Öffnung in der Deckplatte und die Öffnung in der Platte unterhalb des Rotationsmagazins nicht übereinander liegen, sind gleichzeitig ein Befestigungselement einem Fügevorgang zuführbar und ein neues Befestigungselement in eine Kammer des Rotationsmagazins ladbar. Diese Konstruktion eröffnet die Möglichkeit weiterer Zeitersparnis in Bezug auf das Fügen und weitere Zuführen von Befestigungselementen zu einem Setzgerät mit der vorgeschlagenen Zuführvorrichtung.

Das Setzgerät beinhaltet zudem einen Zuführkanal durch den Befestigungselemente, insbesondere Nieten, Bolzen, Nägel, einer Fügestelle zuführbar sind und der die folgenden Merkmale aufweist: einen hohlzylindrischen Kanal mit in Längsrichtung des Kanals verlaufenden Schlitzen, während durch die Schlitze radial in den Kanal ragende Stege bewegbar angeordnet sind.

Die axial verlaufenden Stege ragen in den hohlzylindrischen Zuführkanal und verengen auf diese Weise seinen Querschnitt. Diese Verengung ist auf den Querschnitt eines zu fügenden Befestigungselements angepasst, so dass die Stege einen geringeren Querschnitt im Zuführkanal erzeugen als das Befestigungselement aufweist. Auf diese Weise wird das Befestigungselement durch diese Stege abgebremst, sobald es zwischen diesen Stegen eingeklemmt wird. Um eine einstellbare Klemmkraft der Stege radial nach innen erzeugen zu können, werden die Stege mit Hilfe einer Feder vorgespannt. Dies könnte beispielsweise eine Spiralfeder sein, die sich ebenfalls in axialer Richtung erstreckt und die Stege in den hohlzylindrischen Kanal drückt. Es ist ebenfalls denkbar, einzelne Federelemente bzw. Federringe einzusetzen, die axial voneinander beabstandet entlang des hohlzylindrischen Kanals angeordnet sind. Durch die den hohlzylindrischen Kanal verengende Anordnung der Stege wird das Befestigungselement einerseits abgebremst und zudem in axialer Richtung des Zuführkanals orientiert. Das Abbremsen gewährleistet zudem, dass der Stempel des Setzgeräts ein während des Fügevorgangs vorauseilendes Befestigungselement wieder erreicht, so dass durch die Anlage des Stempels am Befestigungselement, insbesondere die parallele Anlage der benachbarten Stirnflächen von Bolzen und Stempel aneinander, eine Ausrichtung des Befestigungselements im Zuführkanal erfolgt.

Eine weitere Alternative eines Zuführkanals für ein Setzgerät, durch den Befestigungselemente, insbesondere Nieten, Bolzen, Nägel, einer Fügestelle zuführbar sind, weist die folgenden Merkmale auf: einen hohlzylindrischen Kanal mit einer Innen- und einer Außenseite, dessen Innenseite zur Verjüngung des Zuführkanals über eine bestimmte Länge aus einer Mehrzahl in radialer Richtung in den Zuführkanal vorgespannter Bremsbacken besteht, um das Befestigungselement bei seiner Bewegung durch den Zuführkanal in Anlage mit den Bremsbacken zu bringen. Diese Bremsbacken sind vorzugsweise konzentrisch um die Mitte des hohlzylindrischen Kanals angeordnet und weisen jeweils die gleiche Länge auf. Zudem sind sie in Richtung der Mitte des hohlzylindrischen Kanals federvorgespannt.

Die Konstruktion des Zuführkanals mit Bremsbacken erfüllt die gleichen Funktionen wie der oben beschriebene Zuführkanal mit radial in den Kanal ragenden Stegen. Die Bremsbacken ragen in den hohlzylindrischen Kanal hinein und verkleinern dadurch im Bereich der Bremsbacken den Innendurchmesser des hohlzylindrischen Kanals. Da die Bremsbacken in Richtung der Mitte des hohlzylindrischen Kanals federvorgespannt sind, ist der Durchmesser des hohlzylindrischen Kanals in diesem Bereich durch ein ankommendes Befestigungselement vergrößerbar, indem das Befestigungselement die Bremsbacken gegen die Federvorspannung in radialer Richtung von der Mitte des hohlzylindrischen Kanals wegdrückt. Mit dieser Anordnung ist eine Abbremsen und vorzugsweise ein Halten und Positionieren eines Befestigungselements im Zuführkanal realisierbar.

Es wird zudem ein Zuführkanal für ein Setzgerät offenbart, durch den Befestigungselemente, insbesondere Nieten, Bolzen, Nägel, einer Fügestelle zuführbar sind, der die folgenden Merkmale aufweist: einen hohlzylindrischen Kanal mit einer Innen- und einer Außenseite sowie einem ersten und einem zweiten Ende, während das Befestigungselement bei einem Setzvorgang am zweiten Ende aus dem hohlzylindrischen Kanal austritt, einen Druckluftanschluss nahe dem zweiten Ende des hohlzylindrischen Kanals, über den Druckluft in den hohlzylindrischen Kanal vorzugsweise in Richtung des ersten Endes des hohlzylindrischen Kanals, einblasbar ist, so dass das Befestigungselement mittels eingeblasener Druckluft abbremsbar ist.

Der hier beschriebene Zuführkanal realisiert eine Bremsstrecke mit Hilfe eingeblasener Druckluft, die einer Bewegung des Befestigungselements im hohlzylindrischen Kanal entgegenwirkt. Bevor der Setzvorgang des Befestigungselements mit Hilfe des Stempels beginnt, muss sich das Befestigungselement im Zuführkanal gegen den Gegendruck der eingeblasenen Druckluft bewegen. Dieser Druck der eingeblasenen Druckluft, vorzugsweise 1 bis 6 bar, lässt sich derart variieren, dass das Befestigungselement bei seiner Bewegung durch den hohlzylindrischen Kanal abgebremst oder aufgehalten wird. Zudem wirkt die eingeblasene Druckluft auf das gesamte im hohlzylindrischen Kanal bewegte Befestigungselement ein, so dass sie das Befestigungselement auch innerhalb des hohlzylindrischen Kanals ausrichtet.

Die Druckluft wird über Drucklüftkanäle, vorzugsweise zwei bis vier Druckluftkanäle, in den hohlzylindrischen Kanal eingeblasen, während der Druckluftkanal in radialer Richtung von der Außenseite zur Innenseite verläuft und in Richtung des ersten Endes des hohlzylindrischen Kanals geneigt ist. Es ist zudem bevorzugt, den Druckluftkanal direkt mit der Druckluftquelle zu verbinden oder koaxial um den hohlzylindrischen Kanal ein Druckluftresevoir mit Anschluss an eine Druckmittelquelle anzuordnen, die den Druckluftkanal mit Luft versorgt.

Es wird zudem ein Zuführkanal offenbart, durch den Befestigungselemente, insbesondere Nieten, Bolzen, Nägel, einer Fügestelle zuführbar sind, der die folgenden Merkmale aufweist: einen hohlzylindrischen Kanal mit einer Innen- und einer Außenseite sowie einem ersten und einem zweiten Ende, während das Befestigungselement bei einem Setzvorgang am zweiten Ende aus dem hohlzylindrischen Kanal austritt, mindestens einen Druckluftkanal, der in radialer Richtung von der Außenseite zur Innenseite und nahe des zweiten Endes des hohlzylindrischen Kanals verläuft, während der mindestens eine Druckluftkanal eine Drossel umfasst, über die ein Luft-Staudruck zwischen Befestigungselement und zweitem Endes des hohlzylindrischen Kanals ab einem einstellbaren Druckwert im hohlzylindrischen Kanal ablassbar ist.

Dieser Zuführkanal arbeitet ebenfalls mit Gegenluft, die dem sich im Zuführkanal bewegenden Befestigungselement entgegenwirkt. Diese Gegenluft wird jedoch nicht über zusätzliche Druckluftleitungen in den Zuführkanal eingeblasen. Stattdessen wird der sich im hohlzylindrischen Kanal aufbauende Staudruck zum Abbremsen des Befestigungselements genutzt. Da das zweite Ende des hohlzylindrischen Kanals auf dem zu fügenden Bauteil aufsitzt und dadurch annährend verschlossen wird und das Befestigungselement durch geringe Toleranzen zum Innendurchmesser des hohlzylindrischen Kanals diesen annähernd verschließt, bildet sich ein Staudruck in Bewegungsrichtung des Befestigungselements vor diesem aus, während sich das Befestigungselement durch den hohlzylindrischen Kanal in Richtung Bauteil bewegt. Je weiter sich das Befestigungselement in Richtung Bauteil bewegt, um so mehr wird die Luft zwischen Befestigungselement und Bauteil komprimiert, so dass sich der Staudruck vor dem Befestigungselement erhöht. Ist der Staudruck ausreichend hoch, wird dadurch das Befestigungselement abgebremst oder sogar vollständig zum Stillstand gebracht. Um das Abbremsen des Befestigungselements regeln und ein Setzen des Befestigungselements ermöglichen zu können, ist der Staudruck über die nahe dem zweiten Ende des hohlzylindrischen Kanals angeordnete Drossel bzw. das Drosselventil ablassbar. Auf diese Weise wirkt der Staudruck sich nicht negativ auf den Setzvorgang des Befestigungselements aus.

Das Setzgerät beinhaltet des Weiteren eine Ladevorrichtung in Kombination mit einem Träger, insbesondere einem Rotationsmagazin, über die mindestens ein Befestigungselement, vorzugsweise Nieten, Bolzen, Nägel, einzeln in den Träger ladbar ist und die die folgenden Merkmale aufweist: einen Bereitstellungskanal, über den mindestens ein oder eine Mehrzahl von Befestigungselementen der Ladevorrichtung bereitstellbar ist, eine Vereinzelungsanordnung, mit der das mindestens eine Befestigungselement übernehmbar oder mit der aus der Mehrzahl von Befestigungselementen mindestens ein Befestigungselement vereinzelbar ist, so dass es individuell in den Träger überführbar ist, und eine Übergabeanordnung, die das mindestens eine Befestigungselement einzeln an den Träger übergibt, so dass eine seiner Haltepositionen mit dem Befestigungselement beladen ist.

Die Funktion der Ladevorrichtung besteht darin, den Träger der Zuführvorrichtung, vorzugsweise kontinuierlich, mit neuen Befestigungselementen zu beladen. Gemäß einer bevorzugten Ausführungsform wird die Ladevorrichtung in Kombination mit dem bereits oben beschriebenen Rotationsmagazin eingesetzt. Innerhalb des Bereitstellungskanals, der beispielsweise durch einen flexiblen Schlauch gebildet wird, liegen die Befestigungselemente aneinander an, so dass sie axial ausgerichtet hintereinander dem Setzgerät zugeführt werden. Gemäß einer weiteren Ausführungsform werden die Befestigungselemente nicht in einer Reihe im Bereitstellungskanal angeordnet, sondern einzeln bspw. durch den flexiblen Schlauch der Ladevorrichtung zugeführt. Der Bereitstellungskanal ist in seinem Querschnitt so groß gewählt, dass die Befestigungselemente koaxial mit der Längsachse des Bereitstellungskanals ausgerichtet sind. Während die Befestigungselemente hintereinander angeordnet im Bereitstellungskanal zum Laden bereitstehen, übernimmt die Vereinzelungsanordnung jeweils das an erster Position stehende Befestigungselement aus der Vielzahl der Befestigungselemente im Bereitstellungskanal, um dieses für das Laden in den Träger vorzubereiten. Mit Hilfe der Übergabeanordnung wird dann dieses vereinzelte Befestigungselement zum Träger bzw. Rotationsmagazin überführt.

Gemäß einer Ausführungsform umfasst die Vereinzelungsanordnung einen krummlinig verlaufenden Kanal, in dem das mindestens eine Befestigungselement in Längsrichtung des krummlinig verlaufenden Kanals orientiert transportierbar ist. An seinem dem Träger zugewandten Ende weist dieser krummlinig verlaufende Kanal bevorzugt eine Bremsbackenanordnung auf, mit der das Befestigungselement aufhaltbar ist. Während die Befestigungselemente über den krummlinig verlaufenden Kanal mit beliebiger Geschwindigkeit zuführbar sind, wird zur Vorbereitung einer Vereinzelung zunächst das an vorderster Position befindliche Befestigungselement in der Bremsbackenanordnung aufgehalten. Diese Bremsbackenanordnung setzt sich bevorzugt aus einer Mehrzahl von in radialer Richtung bezogen auf den krummlinig verlaufenden Kanal federnd angeordneten Bremsbacken zusammen. Diese Bremsbackenanordnung verringert den Querschnitt des krummlinig verlaufenden Kanals an seinem dem Träger zugewandten Ende so weit, dass der Kanalquerschnitt geringer ist als der maximale Querschnitt des ankommenden Befestigungselements. Da die Bremsbacken federnd angeordnet sind, bremsen sie das Befestigungselement ab, ohne es jedoch unverrückbar festzuklemmen.

Aufgrund des krummlinigen Verlaufs des Kanals ist das in der Bremsbackenanordnung festgehaltene Befestigungselement derart positioniert, dass es mit Hilfe der Übergabeanordnung an das Rotationsmagazin übergeben werden kann. Gemäß einer bevorzugten Ausführungsform wird die Übergabeanordnung durch ein Stellelement, insbesondere eine pneumatische Kolben-Zylinder-Anordnung, realisiert, die das Befestigungselement aus der Bremsbackenanordnung in den Träger versetzt, insbesondere verschiebt. Durch den krummlinigen Verlauf des Kanals muss das Stellelement der Übergabeanordnung nicht den gesamten krummlinig verlaufenden Kanal durchgreifen, sondern es durchgreift lediglich die Bremsbackenanordnung und nimmt auf diese Weise das dort festgehaltene Befestigungselement mit in eine freie Halteposition des Trägers.

Gemäß einer weiteren Ausführungsform der vorliegenden Ladevorrichtung weist die Vereinzelungsanordnung eine drehbare Aufnahme mit mindestens einer radial ausgerichteten Kammer zum Aufnehmen eines Befestigungselements auf, deren mindestens eine radial ausgerichtete Kammer durch Drehung der Aufnahme in Ausrichtung mit dem Bereitstellungskanal und einer Ladeposition des Trägers bringbar ist.

Die drehbare Aufnahme ist vorzugsweise derart angeordnet, dass sich ihre Drehachse rechtwinklig zur Drehachse des Rotationsmagazins erstreckt. Dieser drehbaren Aufnahme wird über einen Kanal eine Mehrzahl von Befestigungselementen zugeführt. Jeweils das vorderste Befestigungselement ist in der radial ausgerichteten Kammer innerhalb der drehbaren Aufnahme aufnehmbar. Es ist ebenfalls denkbar, dass die drehbare Aufnahme zwei gegenüberliegende radial ausgerichtete Kammern oder eine Mehrzahl von gleichmäßig beabstandeten radial ausgerichteten Kammern aufweist. Dies lässt sich beispielsweise durch eine Drehschreibe realisieren, die die drehbare Aufnahme der Vereinzelungsanordnung bildet. Sobald ein Befestigungselement in einer radial ausgerichteten Kammer aufgenommen worden ist, dreht sich die drehbare Anordnung so weit, dass der Ausgang der radial ausgerichteten Kammer gegenüber der Ladeposition des Rotationsmagazins bzw. Trägers angeordnet ist. In dieser Position versetzt die Übergabeanordnung das Befestigungselement aus der radial ausgerichteten Kammer in eine Halteposition des Trägers mit Hilfe von Druckluft, mechanisch, elektromechanisch, elektromagnetisch und/oder piezoelektrisch. Auf diese Weise wird eine bisher leere Halteposition des Trägers geladen, und das neu geladene Befestigungselement ist nun über den Träger der Zuführposition des Setzgeräts zuführbar.

Gemäß einer bevorzugten Ausführungsform der Übergabeanordnung mündet mindestens ein Druckluftkanal in die radial ausgerichtete Kammer, so dass über eine an den Druckluftkanal angeschlossene Druckluftquelle das Befestigungselement mittels eines Druckluftimpulses versetzbar ist.

Es wird zudem eine Ladevorrichtung, für ein Setzgerät offenbart, über die Befestigungselemente, vorzugsweise Nieten, Bolzen, Nägel, einzeln in das Setzgerät ladbar sind und die die folgenden Merkmale aufweist: einen Bereitstellungskanal, über den mindestens ein oder eine Mehrzahl von Befestigungselementen lagerichtig orientiert direkt in einen Zuführkanal zum Setzen durch das Setzgerät transportierbar sind, weil der Bereitstellungskanal direkt in den Zuführkanal mündet oder eine zeitweise Verbindung zwischen Bereitstellungskanal und Zuführkanal herstellbar ist, während der Zuführkanal einen hohlzylindrischen Kanal mit einer Bremsstrecke umfasst, so dass das Befestigungselement in einer Position zum Setzen durch einen Stempel des Setzgeräts nach der Zufuhr aus dem Bereitstellungskanal positionierbar ist.

Die hier offenbarte Ladevorrichtung wird bevorzugt in einem Setzgerät ohne beispielsweise die Nutzung eines Streifens- oder Rotationsmagazins eingesetzt. Sie ermöglicht die Zufuhr des Befestigungselements direkt in den Zuführkanal, also die einzelne und direkte Positionierung des Befestigungselements in eine für das Setzen durch den Stempel vorbereitete Position. Zu diesem Zweck werden die Befestigungselemente lagerichtig orientiert, d.h. beispielsweise für einen Nagel eine Ausrichtung mit der Spitze in Setzrichtung, dem Zuführkanal zugeführt. Die Verbindung zwischen Bereitstellungskanal und Zuführkanal innerhalb der Ladevorrichtung erfolgt bevorzugt über verschiedene alternative Ausgestaltungen. Einerseits wird eine direkte Verbindung zwischen Bereitstellungskanal und Zuführkanal mit Hilfe einer Y-förmigen Verzweigung des Zuführkanals hergestellt, über deren einen Zweig der Bereitstellungskanal permanent mit der Bremsstrecke verbunden ist, während über deren anderen Zweig das Befestigungselement mittels Stempel des Setzgeräts setzbar ist. Gemäß einer weiteren Ausführungsform ist der Zuführkanal zwischen mindestens einer ersten und einer zweiten Position bewegbar angeordnet, während in der ersten Position der Zuführkanal mit dem Bereitstellungskanal für die Zufuhr des Befestigungselements verbunden ist und in der zweiten Position das Befestigungselement mittels Stempel des Setzgeräts durch den Zuführkanal setzbar ist. Die Bewegung des Zuführkanals zwischen erster und zweiter Position erfolgt entweder linear durch ein Versetzen des Zuführkanals und/oder drehend durch eine Schwenkbewegung des Zuführkanals um eine Drehachse, die vorzugsweise senkrecht zur Längsache des Zuführkanals ausgerichtet ist.

Des Weiteren wird ein Rollfuß für ein Setzgerät offenbart, der für einen Setzvorgang eines Befestigungselements in Anlage mit einem Bauteil bringbar ist und die folgenden Merkmale aufweist: ein drehbar gelagertes Rad, das über eine Anordnung an dem Setzgerät befestigbar ist und das auf dem Bauteil bei einer Bewegung des Setzgeräts abrollbar ist, und eine Auslöseanordnung in Verbindung mit dem Rad, die in Abhängigkeit von der Umdrehung des Rads ein Signal erzeugt, mit dem durch Abrollen des Setzgeräts auf dem Bauteil an voneinander beabstandeten Stellen des Bauteils jeweils ein Setzvorgang des Setzgeräts initiierbar ist, während der Abstand zwischen diesen Stellen durch den Abrollweg des Rads vorgegeben ist.

Der Rollfuß dient im Einsatz mit Setzgeräten dem Auslösen von Setzvorgängen an definiert voneinander beabstandeten Fügestellen. Der Abstand der Fügestellen ist über den auf dem Bauteil abrollenden Umfang des Rads des Rollfußes festlegbar. In Ergänzung zu dieser Auslösefunktion ist der Rollfuß auch als Niederhalter zum Aufbringen einer Vorspannung auf die zu fügenden Bauteile einsetzbar.

Gemäß bevorzugter Ausführungsformen des Rollfußes ist mit dessen Rad ein mechanischer Schalter in Abhängigkeit von der Umdrehung oder dem Anteil der Umdrehung des Rads betätigbar, um über mechanische Auslösung ein Signal in der Auslöseanordnung zu erzeugen. In ähnlicher Ausgestaltung ist mit dessen Rad elektrisch das Signal in der Auslöseanordnung generierbar, vorzugsweise über eine Lichtschranke, einen elektrischen Schalter oder einen elektromagnetischen Impulsgeber. Dieses Signal in der Auslöseanordnung, oder allgemein das Auslösesignal, wird an eine Steuerung des Setzgeräts weitergeleitet, um den Setzvorgang an der durch das Abrollen des Rads des Rollfußes identifizierten Stelle durchzuführen. Auf diese Weise wird das Fügen von Befestigungselementen erleichtert, da die Beabstandung der Befestigungselemente bzw. der Fügestellen durch den Rollfuß vorgegeben wird. Zudem löst der Rollfuß automatisch die Setzvorgänge aus, so dass das Setzgerät lediglich durch seine . Bewegung den Pfad vorgeben muss, entlang dessen die Befestigungselemente im Bauteil zu setzen sind. Es ist daher mit Hilfe des Rollfußes ein halbautomatisches Setzen der Befestigungselemente möglich.

Es wird ebenfalls ein Setzgerät offenbart, wie es beispielsweise in der DE 20 2006 016 504 offenbart ist, mit dem ein Befestigungselement an einer Fügestelle einbringbar ist und das eine Zuführvorrichtung und/oder einen Zuführkanal gemäß den oben beschriebenen Konstruktionen oder eine beliebige Auswahl aus den oben genannten Komponenten Zuführvorrichtung, Zuführkanal und Ladevorrichtung aufweist. Eine weitere Alternative eines Setzgeräts umfasst die oben beschriebene Ladevorrichtung, mit der ohne Nutzung eines Streifens- oder Rotationsmagazins Befestigungselemente dem Zuführkanal zuführbar sind.

Des Weitern wird ein Setzgerät offenbart, mit dem ein Befestigungselement an einer Fügestelle einbringbar ist und das eine Zuführvorrichtung mit Rotationsmagazin und/oder einen Zuführkanal aufweist, während oberhalb des Rotationsmagazins ein Speichermagazin angeordnet ist, in dem eine Mehrzahl an Befestigungselementen aufnehmbar und aus dem die Befestigungselemente in das Rotationsmagazin abgebbar sind.

Gemäß einer weiteren Ausgestaltung der oben genannten Setzgeräte weisen diese den beschriebenen Rollfuß und/oder eine Niederhalteranordnung auf, die zwischen einer das Setzgerät tragenden Anordnung, beispielsweise ein Roboter, und dem Setzgerät angeordnet ist, um eine Niederhaltefunktion des Setzgeräts zu realisieren und Reaktionskräfte des Setzgeräts während eines Setzens von Befestigungselementen gegenüber der tragenden Anordnung zu dämpfen. Zudem gewährleistet diese Niederhalteranordnung vorzugsweise ein kraftgesteuertes Aufsetzen des Setzgeräts auf das Werkstück, was mit einer pneumatisch oder hydraulisch funktionierenden Niederhalteranordnung realisierbar ist.

Zudem offenbart die vorliegende Erfindung ein Verfahren zum Zuführen von Befestigungselementen in ein erfindungsgemäßen Setzgerät, das die folgenden Schritte umfasst: Laden eines ersten Befestigungselements an einer Ladeposition in einen Träger, insbesondere ein Rotationsmagazin, Entladen eines zweiten Befestigungselements an einer Zufuhrposition in einen Zuführkanal des Setzgeräts, durch den das zweite Befestigungselement gefügt wird, während das Laden und Entladen gemäß einer bevorzugten Ausführungsform gleichzeitig erfolgt. Es ist ebenfalls bevorzugt, in Abhängigkeit von den umzusetzenden Prozessroutinen des Setzgeräts, ein zeitlich versetztes Laden und Entladen von Befestigungselementen zu realisieren.

Zudem offenbart die vorliegende Erfindung ein Verfahren zum Fügen von Befestigungselementen, insbesondere Nieten, Bolzen, Nägel, mit dem erfindungsgemäßen Setzgerät, wie es beispielsweise oben beschrieben worden ist, das die folgenden Schritte aufweist: Zustellen des Setzgerätes in Anlage mit einem der zu verbindenden Bauteile, so dass die zu verbindenden Bauteile ohne einen separat bewegten Niederhalter gegeneinander vorgespannt sind, und Einbringen des Befestigungselements in die zu verbindenden Bauteile. In weiterer Ausgestaltung dieses Verfahrens erfolgt das Zustellen durch Bewegen des gesamten Setzgeräts mit Hilfe eines Roboters, bis das Setzgerät über einen Niederhalter, insbesondere einen Zuführkanal, an einem der zu verbindenden Bauteile anliegt und diese vorspannt. Auf Grundlage dieser Verfahrensschritte wird jede Fügestelle einzeln angefahren, so dass die Verfahrbewegung des Setzgeräts über mehrere Fügestellen an jeder Fügestelle unterbrochen wird, um das Befestigungselement einzubringen. Das oben beschriebene Verfahren umfasst bevorzugt folgenden weiteren Schritt: Abbremsen des einzubringenden Befestigungselements innerhalb eines Zuführkanals mittels Reibung zwischen dem Befestigungselement und einer Bremsstrecke des Zuführkanals und/oder Abbremsen des einzubringenden Befestigungselements innerhalb eines Zuführkanals mittels Gegenluft, wobei Druckluft in den Zuführkanal entgegen der Setzbewegung des Befestigungselements eingeblasen wird oder aufgrund der Anlage des Setzgeräts am Bauteil ein Staudruck im Zuführkanal zwischen Befestigungselement und Bauteil erzeugt wird.

Gemäß einer weiteren Ausführungsform umfasst das obige Verfahren die weiteren Schritte: Bewegen des Setzgeräts über eine Mehrzahl von Fügestellen, während der Niederhalter des Setzgeräts die zu verbindenden Bauteile vorspannt und in Anlage mit einem der zu verbindenden Bauteile steht, und Einbringen der Befestigungselemente an der Mehrzahl von Fügestellen, mit oder ohne das Bewegen des Setzgeräts über die Mehrzahl an Fügestellen an den einzelnen Fügestellen zu unterbrechen.

Mit Hilfe dieser Verfahrensalternative wird das Setzgerät kontinuierlich über die Mehrzahl von Fügestellen bewegt, spannt trotz dieser kontinuierlichen Bewegung aufgrund der Anlage des Niederhalters bzw. des Setzgeräts an mindestens einem der zu verbindenden Bauteile diese Bauteile vor und bringt während dieser kontinuierlichen Bewegung des Setzgeräts das jeweilige Befestigungselement an den einzelnen Fügestellen ein. Zu diesem Zweck nutzt das Setzgerät einen Niederhalter mit einem Rollfuß, der einerseits das Aufbringen einer Vorspannung auf die zu verbindenden Bauteile und andererseits ein ungehindertes Bewegen des Niederhalters bzw. Setzgeräts in Anlage mit zumindest einem der Bauteile gestattet. Es ist weiterhin bevorzugt, diesen Rollfuß mit zumindest einer Aussparung auszustatten, so dass eine Bewegung des Rollfußes durch ein eingebrachtes Befestigungselement, beispielsweise einen an der Oberfläche vorstehenden Kopf eines Nagels, nicht behindert wird. Zudem ist der Rollfuß vorzugsweise mit einer Auslöseanordnung ausgestattet, die in Abhängigkeit von der Abrollbewegung des Rollfußes auf dem Bauteil ein Auslösesignal zum Start eines Setzvorgangs des Setzgeräts initiiert. Das erfindungsgemäße Verfahren weist daher vorzugsweise zusätzlich die folgenden weiteren Schritte auf: Abrollen des Setzgeräts auf einem der zu verbindenden Bauteile mit einem Rollfuß und Erzeugen eines Signals mit dem Rollfuß in Abhängigkeit von einer Umdrehung des Rollfußes, das jeweils einen Setzvorgang initiiert, so dass die Umdrehung des Rollfußes die Fügeposition vorgibt.

Zudem wird ein Verfahren zum Fügen von Befestigungselementen, insbesondere Nieten, Bolzen Nägel mit einem erfindungsgemäßen offenbart, das die folgenden Schritte aufweist: Vorspannen einer Mehrzahl zu verbindender Bauteile mit einer vom Setzgerät unabhängigen Spannkonstruktion, Zustellen des Setzgeräts zu den zu verbindenden Bauteilen, ohne dass das Setzgerät an einem der zu verbindenden Bauteile anliegt, und Einbringen des Befestigungselements in die zu verbindenden Bauteile.

Gemäß dieser Ausführungsform erfolgt das Einbringen von Befestigungselementen on-the-fly des Setzgeräts an der Mehrzahl von Fügestellen. Bei diesem Vorgang wird das Setzgerät bzw. dessen Niederhalter nicht auf die zu verbindenden Bauteile aufgesetzt, so dass aus einer vorgewählten Beabstandung zwischen Setzgerät und Bauteil das Fügen erfolgt. Diese Vorgehensweise ermöglicht ebenfalls das Einbringen der Befestigungselemente an der Mehrzahl von Fügestellen, mit oder ohne das Bewegen des Setzgeräts an den einzelnen Fügestellen zu unterbrechen.

Die oben beschriebenen Verfahren sind zudem vorzugsweise mit den Funktionen eines Rollfußes optimierbar. Daher weisen sie ergänzend folgende Schritte auf: Aufsetzen und Abrollen eines Rollfußes auf dem Bauteil in Kombination mit einer Bewegung des Setzgeräts, ohne oder um dadurch die Bauteile vorzuspannen, und Erzeugen eines Signals mit dem Rollfuß in Abhängigkeit von einer Umdrehung des Rollfußes, das jeweils einen Setzvorgang des Setzgeräts initiiert, so dass die Umdrehung des Rollfußes die Fügeposition vorgibt.

### 3. Kurze Beschreibung der begleitenden Zeichnung

Die vorliegende Erfindung wird unter Bezugnahme auf die begleitende Zeichnung näher erläutert. Es zeigen:
- Fig. 1: eine perspektivische Ansicht von oben einer ersten Ausführungsform der vorliegenden Erfindung,
- Fig. 2: eine perspektivische Ansicht von unten der ersten Ausführungsform der vorliegenden Erfindung,
- Fig. 3: eine Ausschnittsvergrößerung aus der perspektivischen Ansicht gemäß Fig. 1,
- Fig. 4: eine perspektivische Ansicht von oben einer weiteren Ausführungsform der vorliegen- den Erfindung,
- Fig. 5: eine perspektivische Ansicht von unten der weiteren Ausführungsform der vorliegen- den Erfindung,

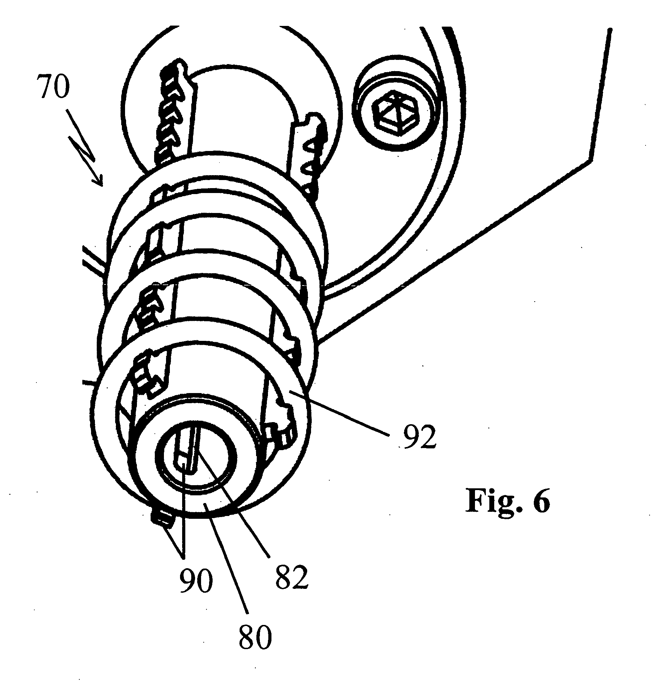

- Fig. 6: eine perspektivische Ansicht einer bevorzugten Ausführungsform des Zuführkanals
- Fig. 7: eine perspektivische Ansicht einer bevorzugten Ausführungsform der vorliegenden Erfindung mit Ladevorrichtung,
- Fig. 8: eine Ausschnittsvergrößerung der bevorzugten Ausführungsform aus Fig. 7,
- Fig. 9: eine Ausschnittsvergrößerung der Ausführungsform aus Fig. 7,
- Fig. 10: eine vergrößerte Darstellung der bevorzugten Bremsbackenanordnung,
- Fig. 11: eine perspektivische Ansicht einer weiteren Ausführungsform der vorliegenden Er- findung mit Ladevorrichtung,
- Fig. 12: eine vergrößerte Darstellung der bevorzugten Ladevorrichtung aus Fig. 11,
- Fig. 13: eine vergrößerte Darstellung der Ausführung aus Fig. 11 von hinten
- Fig. 14: eine bevorzugte Ausführungsform eines Stegs der Bremsstrecke aus Fig. 6,
- Fig. 15: eine bevorzugte Ausführungsform eines Zuführkanals mit Bremsbacken im Längs- schnitt,
- Fig. 16: eine Schnittdarstellung durch den Zuführkanal aus Fig. 15 entlang der Linie B-B,
- Fig. 17: eine bevorzugte Ausführungsform eines Zuführkanals mit Druckluftanschluss,
- Fig. 18: der Zuführkanal aus Fig. 17 in perspektivischer Ansicht,
- Fig. 19: ein Schnitt durch den Zuführkanal aus Fig. 17 entlang der Line A-A,
- Fig. 20: ein Schnitt durch den Zuführkanal aus Fig. 17 entlang der Linie B-B,
- Fig. 21: eine bevorzugte Ausführungsform einer Ladevorrichtung zur direkten Zufuhr der Befestigungselemente in den Zuführkanal und
- Fig. 22 und 23: eine weitere bevorzugte Ausführungsform einer Ladevorrichtung zur direk- ten Zufuhr der Befestigungselemente in den Zuführkanal.

### 4. Detaillierte Beschreibung bevorzugter Ausführungsformen

Die erfindungsgemäße Zuführvorrichtung 1 wird allgemein in Setzgeräten zum Einbringen von Befestigungselementen, wie beispielsweise Nieten, Bolzen, Nägeln und ähnlichem, eingesetzt. Eine bevorzugte Ausführungsform nutzt die Zuführvorrichtung 1 in Verbindung mit dem in der DE 20 2006 016 504 beschriebenen Setzgerät. Mit Hilfe der im Folgenden beschriebenen Konstruktionen werden Befestigungselemente im Vergleich zum Stand der Technik schneller zugeführt und gefügt. Dies ermöglicht beispielsweise, Werkstücke im "Vorüberfliegen" zu fügen, also ohne das Setzgerät an jeder Fügeposition zu stoppen, um den Fügevorgang abzuwarten.

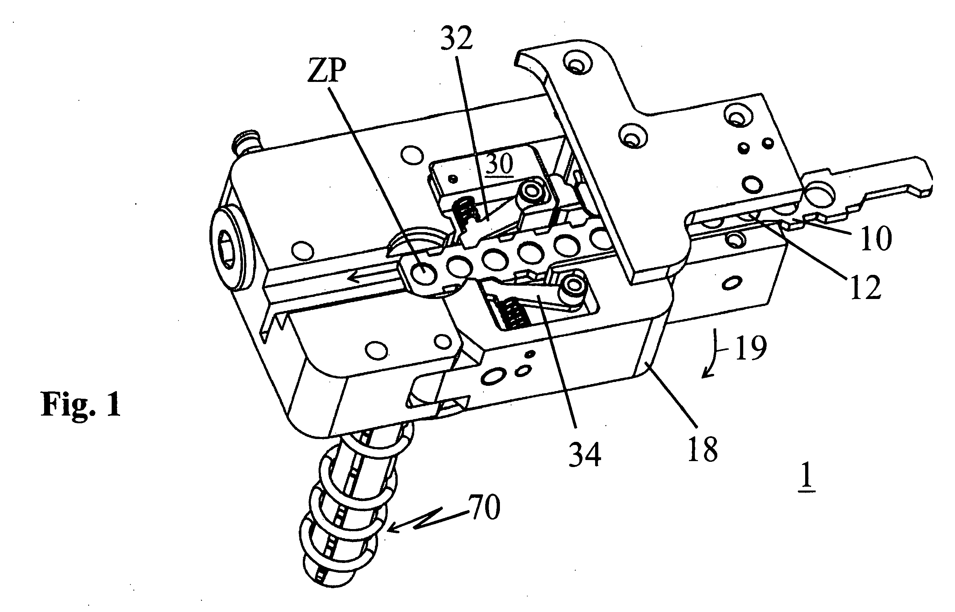

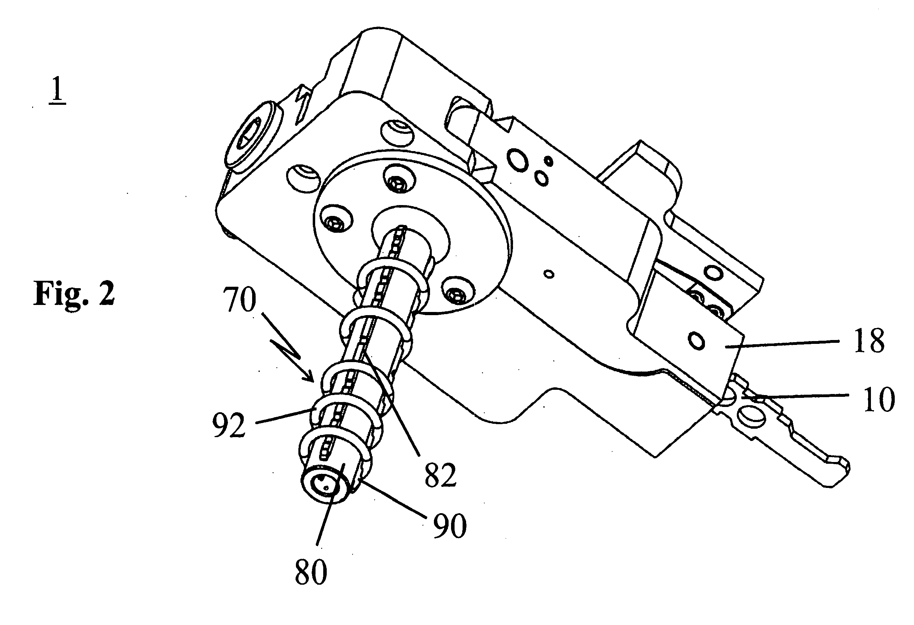

Fig. 1 zeigt eine perspektivische Ansicht von oben der Zuführvorrichtung 1, während in Fig. 2 eine perspektivische Ansicht dieser Ausführungsform von unten dargestellt ist. Mit Hilfe dieser Zuführvorrichtung 1 wird ein Befestigungselement zu einer Zufuhrposition ZP gebracht, von wo aus direkt oder indirekt über einen Stempel S des Setzgeräts der Fügevorgang durchgeführt wird. Eine Mehrzahl von Befestigungselementen ist in einem Träger 10; 20 gehalten. In einer bevorzugten Ausführungsform ist der Träger in Form eines Streifenmagazins 10 ausgebildet. Dieses Streifenmagazin 10 umfasst gleichmäßig beabstandete Haltepositionen 12 in Form von Öffnungen, in denen jeweils ein Befestigungselement gehalten wird. Diese Öffnungen können an das entsprechende Befestigungselement angepasste Haltemittel aufweisen, so dass das Streifenmagazin 10 in jeder beliebigen Orientierung innerhalb des Setzgeräts einsetzbar ist. Es ist beispielsweise möglich, einen Streifen 10 mit zehn bis zwanzig Haltepositionen 12 aus stabilem Kunststoff oder Metall bereitzustellen. Eine weitere Alternative stellt ein bekanntes Trägerband dar, aufgrund dessen Länge eine Vielzahl von Befestigungselementen zuführbar ist.

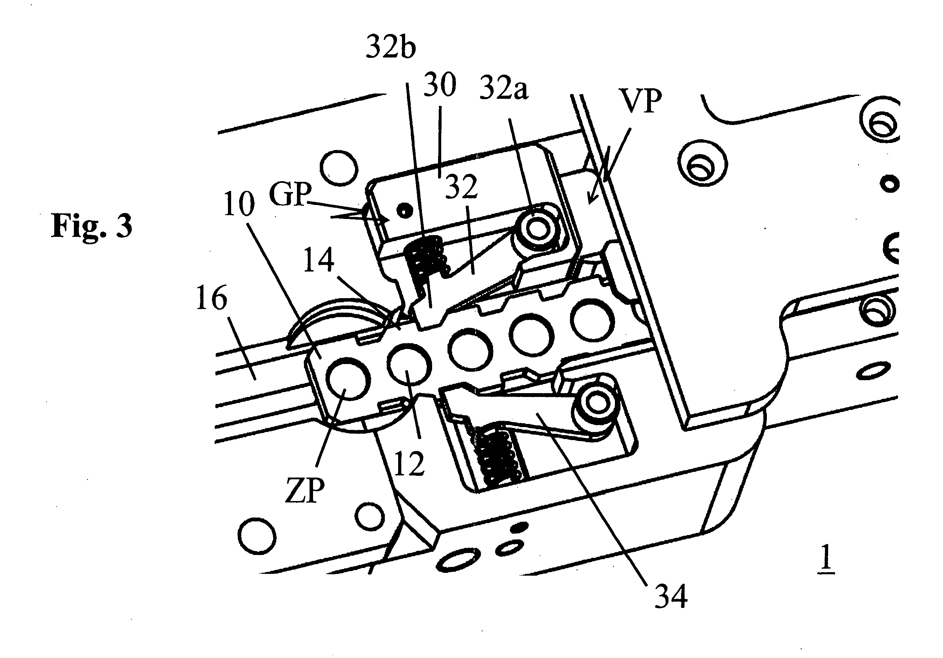

Das Streifenmagazin 10 umfasst an beiden seitlichen Stirnflächen eine widerhakenförmige Struktur 14, wie es in den Figuren 1 und 3 dargestellt ist. Diese widerhakenförmige Struktur 14 ist derart geformt, dass das Streifenmagazin 10 nur in die in Fig. 1 angegebene Pfeilrichtung bewegbar ist. Bevorzugt erfolgt diese Bewegung in äquidistanten Schritten, während die Schrittgröße den Abstand zwischen den beiden Mittelpunkten von zwei benachbarten Haltepositionen 12 umfasst. Mit der Wahl dieser Schrittgröße ist es möglich, dass mit jedem Schritt die nächstfolgende Halteposition 12 oberhalb der Zuführposition ZP angeordnet wird. Dadurch wird mit jedem Schritt des Streifenmagazins 10 ein neues Befestigungselement an der Zufuhrposition ZP bzw. vor dem Eingang des Zuführkanals 70 positioniert, so dass es durch den Stempel S gefügt werden kann.

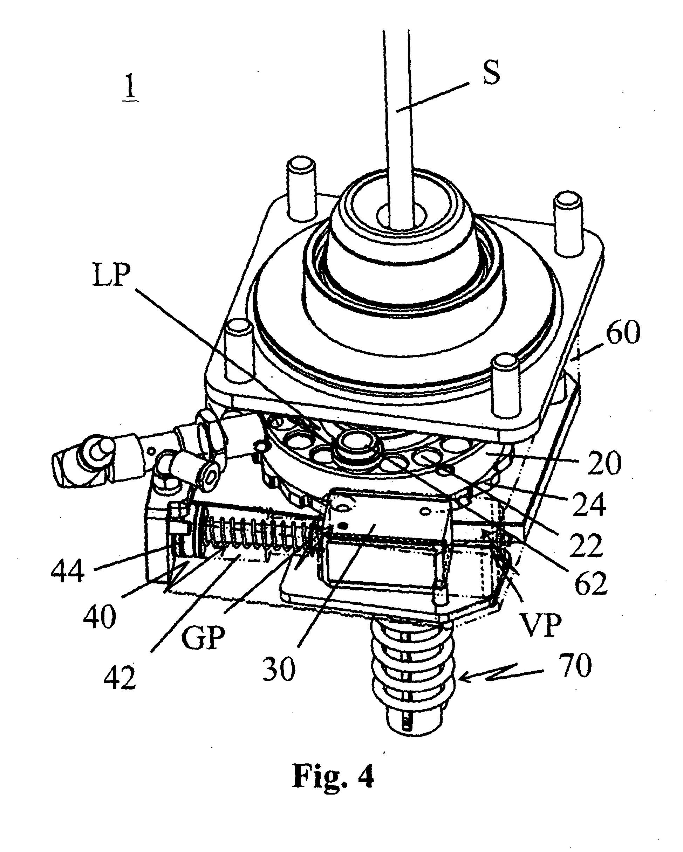

Fig. 3 zeigt eine Ausschnittsvergrößerung aus Fig. 1, in der der Vorschubmechanismus für das Streifenmagazin 10 und auch für das unten beschriebene Rotationsmagazin 20 in größerem Detail veranschaulicht ist. Dieser Vorschubmechanismus umfasst einen Schlitten 30, der in einer Gehäuseaussparung bewegbar angeordnet ist. Der Schlitten 30 wird zwischen einer Vorschubposition VP und einer Grundposition GP bewegt, während gemäß einer bevorzugten Ausführungsform diese Bewegung mit Hilfe einer linearen Verschiebung des Schlittens 30 ausgeführt wird. Um diese Bewegung zu realisieren, ist der Schlitten 30 mit einer Kolben-Zylinder-Anordnung 40 gemäß Fig. 4 verbunden.

Diese Kolben-Zylinder-Anordnung 40 setzt sich aus verschiedenen konstruktiven Bestandteilen zusammen, wie man der Fig. 4 entnehmen kann. Auch wenn die Fig. 4 eine Ausführungsform der Zuführvorrichtung 1 mit einem Rotationsmagazin 20 zeigt, ist diese Kolben-Zylinder-Anordnung 40 in gleicher Weise in der Zuführanordnung 1 gemäß den Figuren 1 bis 3 enthalten.

Innerhalb des Gehäuses der Zuführanordnung 1 (vgl. Fig. 4) ist ein Hohlzylinder 42 ausgebildet. Innerhalb des Hohlzylinders 42 ist der Kolben 44 pneumatisch bewegbar. Der Kolben 44 wiederum ist fest mit dem Schlitten 40 verbunden. Zwischen dem Kopf des Kolbens 44 und dem Ende des Zylinders 42 innerhalb des Gehäuses der Zuführvorrichtung 1 ist eine Feder 46 angeordnet. Wird der Kolben 44 mit Luftdruck beaufschlagt, verschiebt er sich innerhalb des Hohlzylinders 42 und bewegt dadurch den Schlitten 30 von der Grundposition GP in die Vorschubposition VP. Wie man in den Figuren 1 und 3 erkennt, wird während der Bewegung aus der Grundposition GP in die Vorschubposition VP der Schlitten 30 entgegen der Pfeilrichtung aus Fig. 1 bewegt. Dabei schnappt der federvorgespannte Vorschubarm 32 mit seinem zweiten am Streifenmagazin 10 befindlichen Ende 32b über den angrenzenden Widerhaken hinüber. Durch den federvorgespannten Blockierhebel 34 und dessen Verhakung in der widerhakenförmigen Struktur 14 wird verhindert, dass das Streifenmagazin 10 entgegen der Pfeilrichtung aus Fig. 1 der Bewegung des Schlittens 30 folgt. Es ist ebenfalls bevorzugt, dass diese Bewegung des Schlittens 30 von der Grundposition GP in die Vorschubposition VP dann ausgeführt wird, wenn der Stempel S gerade die Öffnung bzw. Halteposition 12 des Streifenmagazins 10 durchgreift, die sich an der Zuführposition ZP befindet. In diesem Fall wäre ebenfalls durch den Stempel S eine Bewegung des Streifenmagazins 10 entgegen der Pfeilrichtung verhindert, so dass nicht erfindungsgemäß auf den Blockierhebel 34 verzichtet werden kann.

Befindet sich der Schlitten 30 in der Vorschubposition VP, ist der Schlitten 30 durch die komprimierte Feder 46 zwischen dem Kopf des Kolbens 44 und dem Ende des Zylinders 42 in Richtung der Grundposition GP federvorgespannt. Wird nun der Stempel S aus der Öffnung des Streifenmagazins 10 an der Zufuhrposition ZP entfernt oder wird das Streifenmagazin 10 anderweitig freigegeben, so dass es sich in Pfeilrichtung gemäß Fig. 1 bewegen kann, erzeugt die Federvorspannung des Schlittens 30 den Vorschub des Streifenmagazins 10 um einen bereits oben erwähnten äquidistanten Schritt. Der Schlitten 30 befindet sich dann wieder in der Grundposition GP, der Vorschubarm 32 ist wieder gegenüber dem Blockierarm 34 angeordnet, da dieser einen Widerhaken weiterschnappt und die nächste Öffnung bzw. Halteposition 12 des Streifenmagazins 10 mit Befestigungselement ist an der Zufuhrposition ZP angeordnet.

Es ist bevorzugt, den verwendeten Träger 10; 20 mit einer Reibungsbremse (nicht gezeigt) auszustatten. Diese verhindert, dass bei Vorschub des Trägers 10; 20 über den Schlitten 30 dieser nicht übermäßig beschleunigt wird. Als Reibungsbremse wirkt beispielsweise eine Feder, die den Träger 10; 20 gegen das Gehäuse des Vorschubmechanismus oder des Setzgeräts drückt. Dadurch wird aufgrund von Reibung zwischen Träger 10; 20 und Gehäuse die Bewegung des Trägers 10; 20 nur soviel verlangsamt oder behindert, dass sich der Träger 10; 20 angepasst an seine Zufuhrfunktion der Befestigungselemente bewegt. Eine derartige Reibungsbremse wirkt beispielsweise der Eigenträgheit des Trägers 10; 20 entgegen, um eine übermäßige Beschleunigung des Trägers 10; 20 bei einer Vorschubbewegung zu dämpfen.

Es ist ebenfalls bevorzugt, die Kolben-Zylinder-Anordnung 40 mit Hilfe einer mechanischen, elektromechanischen, elektromagnetischen oder piezokeramischen Vorrichtung zu realisieren.

Wie man ebenfalls in den Figuren 1 und 3 erkennen kann, wird das Streifenmagazin 10 in einer Schiene 16 des Gehäuses der Zuführvorrichtung 1 bewegt. Diese Schiene 16 umfasst beispielsweise eine mittige Nut, so dass der Kopf der Befestigungselemente in den Öffnungen/Haltepositionen 12 des Streifenmagazins 10 gehalten werden kann, während sich jeweils der Schaft in der mittigen Nut der Führungsschiene 16 bewegt. Zudem ist bevorzugt seitlich an der Zuführvorrichtung 1 eine Klappvorrichtung 18 vorgesehen. Diese ist um eine Drehachse schwenkbar an der Zuführvorrichtung 1 befestigt, so dass nach Öffnen der Klappvorrichtung 18 in Pfeilrichtung 19 (vgl. Fig. 1) das Einsetzen des Streifenmagazins 10 erleichtert wird.

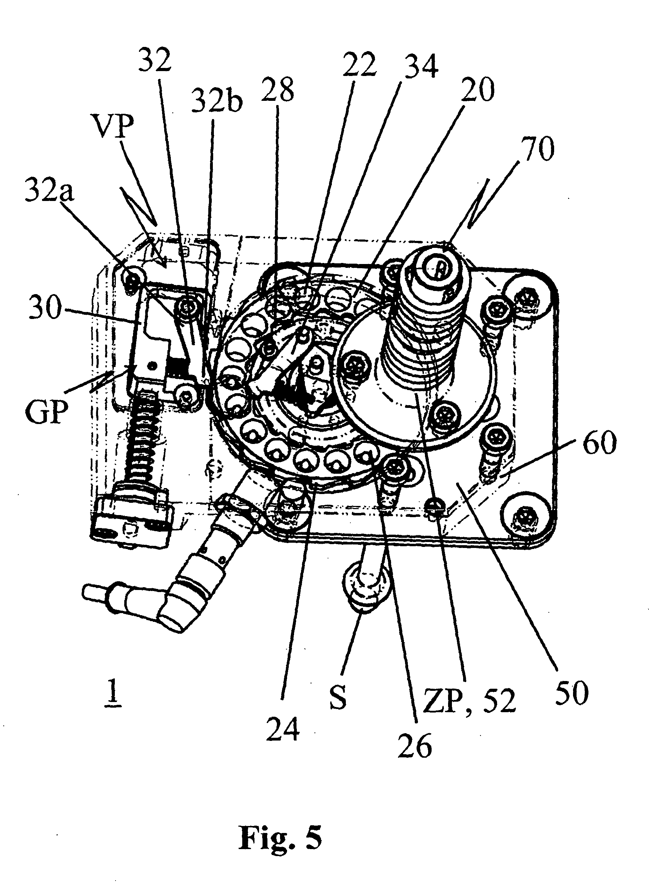

Gemäß einer weiteren Ausführungsform der vorliegenden Erfindung ist der Träger als Rotationsmagazin 20 gemäß den Figuren 4 und 5 ausgebildet. Dieses Rotationsmagazin 20 besteht aus einer ringförmigen Konstruktion, die entlang ihrer Umfangsrichtung gleichmäßig beabstandete Kammern 22 aufweist. Diese Kammern 22 sind in ihrer Größe bevorzugt derart ausgebildet, dass sie Befestigungselemente lagerichtig aufnehmen können.

Das Rotationsmagazin 20 ist nach unten durch die Platte 50 begrenzt. Es ist ebenfalls denkbar, das Rotationsmagazin 20 in einem geschlossenen Gehäuse anzuordnen, so dass die Befestigungselemente nicht aus den Kammern 22 herausfallen können. Bevorzugt ist oberhalb der Öffnung des Zufuhrkanals 70 die Öffnung 52 in der Platte 50 vorgesehen, die der Zuführposition ZP für Befestigungselemente gemäß der Anordnung aus Fig. 3 entspricht.

Wird das Rotationsmagazin 20 in gleicher Weise wie das Streifenmagazin 10 durch die Kolben-Zylinder-Anordnung 40 mit Schlitten 30 um einen Schritt weiterbewegt, wird die nächste Kammer 22 oberhalb der Zufuhrposition ZP angeordnet. Auf diese Weise wird das nächste Befestigungselement für den Fügevorgang durch den Stempel S bereitgestellt. Das schrittweise Weiterbewegen des Rotationsmagazins 20 erfolgt derart, wie es oben in Zusammenhang mit dem Streifenmagazin beschrieben worden ist. Zu diesem Zweck weist das Rotationsmagazin 20 an seiner umfänglichen Außenseite die widerhakenförmige Struktur 24 auf (vgl. Fig. 5). Außerdem ist an der umfänglichen Innenseite die widerhakenförmige Struktur 28 ausgebildet, um ein Blockiermittel in Form eines schwenkbaren Hebels 34 anzuordnen. In gleicher Weise wie in Bezug auf Fig. 3 beschrieben, ist es nicht erfindungsgemäß ebenfalls möglich, den Stempel S als Blockiermittel zu nutzen, wenn er gerade eine der Kammern 26 an der Zufuhrposition ZP durchläuft.

An der Oberseite des Rotationsmagazins 20 werden die Kammern 22 durch eine Deckplatte 60 verschlossen. An einer Ladeposition LP ist in der Deckplatte 60 eine Öffnung 62 vorgesehen, durch die leeren Kammern 22 des Rotationsmagazins 20 neue Befestigungselemente zugeführt werden. Da sich die Ladeposition LP und die Zufuhrposition ZP an unterschiedlichen Stellen befinden, ist es möglich, das Zuführen und Fügen von Befestigungselementen gleichzeitig mit dem Nachladen bzw. Füllen des Rotationsmagazins 20 mit Befestigungselementen durchzuführen. Auf diese Weise können Stillstandszeiten des Setzgeräts verringert werden sowie eine unbegrenzte Anzahl an Befestigungselementen in das Rotationsmagazin 20 mit hoher Frequenz nachgeladen werden.

Gerade mit der Ausführungsform gemäß den Figuren 4 und 5 ist somit ein Zuführverfahren von Befestigungselementen in einem Setzgerät realisierbar, bei dem zunächst ein Laden eines ersten Befestigungselements an einer Ladeposition LP in dem Rotationsmagazin 20 erfolgt. Gleichzeitig zu diesem Ladevorgang erfolgt ein Entladen eines zweiten Befestigungselements an einer Zufuhrposition ZP in einen Zuführkanal 70 des Setzgeräts, durch den das zweite Befestigungselement gefügt wird. Man kann den Zuführkanal 70 auch als Mundstück des Setzgeräts bezeichnen. Der Zuführkanal 70 befindet sich während des Setzvorgangs kurz über der Bauteiloberfläche oder greift an dieser an, um beispielsweise das Bauteil vorzuspannen und/oder den Zuführkanal 70 zu verschließen (s. unten). Durch diesen speziellen Verfahrensablauf ist somit gleichzeitig ein effektives Fügen von Befestigungselementen und ein Nachliefern von neuen Befestigungselementen gewährleistet. Es ist ebenfalls bevorzugt, in Abhängigkeit von den zu realisierenden Prozessroutinen des Setzgeräts, ein zeitlich versetztes Laden und Entladen von Befestigungselementen zu realisieren.

Wurde ein Befestigungselement mit Hilfe des Streifenmagazins 10 oder des Rotationsmagazins 20 an der Zufuhrposition ZP angeordnet, beginnt der Fügevorgang durch das Setzgerät und dessen Stempel S. Das im Streifenmagazin 10 befindliche Befestigungselement wird durch den Stempel S aus der entsprechenden Halteposition herausgelöst bzw. herausgeschlagen. Nach diesem Vorgang eilt das Befestigungselement zunächst der Stirnfläche des Stempels S voraus. Befindet sich das Befestigungselement in einer Kammer 22 des Rotationsmagazins 20, fällt das Befestigungselement durch die Öffnung 52 in den Zuführkanal 70. Auch in diesem Moment eilt das Befestigungselement der Stirnfläche des Stempels S voraus. Im Zuführkanal 70 wird das Befestigungselement abgebremst, so dass die Stirnseite des Stempels S in Anlage mit dem Befestigungselement, beispielsweise mit dessen Nietkopf oder mit dem Kopf eines Bolzens, gelangt. Das Befestigungselement und der Stempel S bewegen sich nun in Anlage gemeinsam in Richtung der Fügestelle durch den Zuführkanal 70. Durch die Anlage aneinander wird das Befestigungselement ausgerichtet und lagegenau positioniert, was zudem durch eine zentrierende Wirkung des Zuführkanals 70 unterstützt wird.

Um diese Funktion zu gewährleisten, besteht der Zuführkanal 70 aus einem hohlzylindrischen Kanal 80. Dieser hohlzylindrische Kanal 80 weist in seiner Längsrichtung verlaufende Schlitze 82 auf. Innerhalb dieser Schlitze sind radial in den Kanal 80 hinein ragende Stege 90 bewegbar angeordnet. Diese Stege 90 werden durch Federkraft radial in den Kanal 80 hinein vorgespannt und können radial nach außen federnd nachgeben. Die Stege 90 bestehen bevorzugt aus Kunststoff, Metall oder einem anderen abriebfesten Material. Zur Erzielung der Federvorspannung werden die Stege 90 durch eine Spiralfeder 92 oder durch axial verteilte Federringe in das Innere des Kanals 80 gedrückt.

Die Stege 90 ragen so weit in das Innere des Kanals 80, dass der Durchgangsquerschnitt des Kanals 80 verkleinert wird. Das Ziel dieser Konstruktion besteht darin, den Durchgangsquerschnitt des Kanals 80 so weit zu verkleinern, dass der Durchgangsquerschnitt geringer ist als ein maximaler Querschnitt eines Befestigungselements. Hier wäre beispielsweise bei einem Bolzen mit Kopf der Kopfdurchmesser maßgeblich. Bewegt sich nun ein Befestigungselement durch den Zuführkanal 70, wird es durch die in die Kanalmitte ragenden Stege 90 abgebremst und im Kanal 80 zentriert. Da die Stege 90 entgegen der von außen wirkenden Federkraft ausweichen können, bleibt das Befestigungselement nicht unbewegbar im Führungskanal 70 stecken, sondern kann durch den nachfolgenden Stempel S weiterbewegt werden. Es findet somit nach Anlage des Stempels S an dem Befestigungselement eine Ausrichtung durch die Stirnfläche des Stempels S und eine Ausrichtung durch die Anlage des Befestigungselements an den Stegen 90 statt. Auf diese Weise wird das Befestigungselement so genau wie möglich der Fügestelle zugeführt.

Gemäß einer weiteren Ausgestaltung der Stege 90 sind deren radial in den Kanal 80 ragenden Enden mit Flächenelementen (nicht gezeigt) ausgestattet. Im Querschnitt haben die Stege 90 daher eine T-ähnliche Struktur. Die Orthogonale dieser Flächenelemente ist vorzugsweise radial ausgerichtet, so dass die Flächenelemente beispielsweise eine Krümmung ähnlich der Innenwand des Kanals 80 aufweisen. Durch die Flächenelemente ist gewährleistet, dass die Stege 90 nicht nur punktuell am Befestigungselement angreifen, um eine bestimmte Ausrichtung zu erzeugen. Wenn die Flächenelemente nahezu aneinandergrenzen, halten sie auf diese Weise gemäß einer Ausführungsform das Befestigungselement auf annähernd der gesamten Umfangsfläche, bspw. eines Nagelkopfes, fest, um den Nagel auszurichten. Es ist weiterhin denkbar, dass die Stege 90 mit zunehmender Entfernung von der Zuführposition in radialer Richtung weiter in den Kanal 80 hinein ragen. Diese Anordnung gewährleistet, dass auch bei variierenden Durchmessern der Befestigungselemente diese durch die Stege 90 abgebremst und ausgerichtet werden.

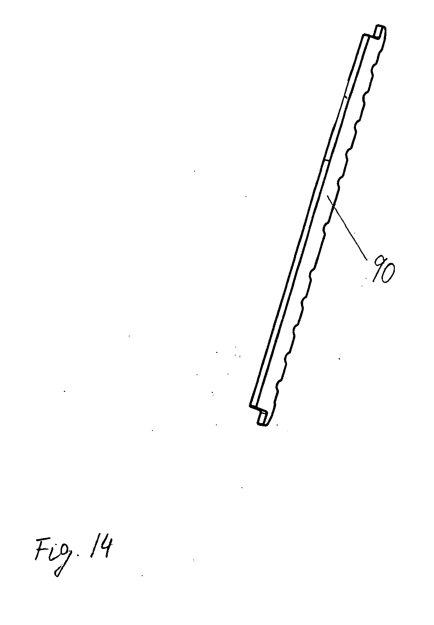

Eine weitere bevorzugte Ausführungsform der Stege 90 zeigt Fig. 14. Der hier exemplarisch dargestellte Steg 90 weist keine T-ähnliche Struktur auf. Die in der Fig. 14 rechts dargestellte Seite des Stegs zeigt die außerhalb des Kanals 80 angeordnete Seite, während die in der Fig. 14 links dargestellte Stirnseite des Stegs die in den Kanal 80 hineinragende Stegseite darstellt. An der Außenseite des Stegs 90 sind Vertiefungen zu erkennen, in die beispielsweise die bereits oben genannten Federringe 92 oder eine Spiralfeder eingreifen. Daher wird der Steg 90 über diese Vertiefungen und die angreifende Feder in das Innere des Kanals 80 gedrückt. Die in den Kanal 80 ragende Stirnseite des Stegs 90 ist beispielsweise als eine gerade Ebene ausgebildet. In gleicher Weise wie in Bezug auf die T-ähnliche Struktur oben beschrieben worden ist, ist diese nach innen ragende Stirnseite bevorzugt auch als eine gebogene Ebene ausgebildet. Die Biegung dieser Ebene verläuft derart, dass die orthogonale dieser nach innen ragenden Ebene jeweils radial auf die Mitte des Kanals 80 ausgerichtet ist. Dadurch wird sichergestellt, dass diese in den Kanal 80 ragende Stirnseite nicht nur punktuell sondern mit ihrer gesamten zur Verfügung stehenden Breite an dem Befestigungselement anliegt.

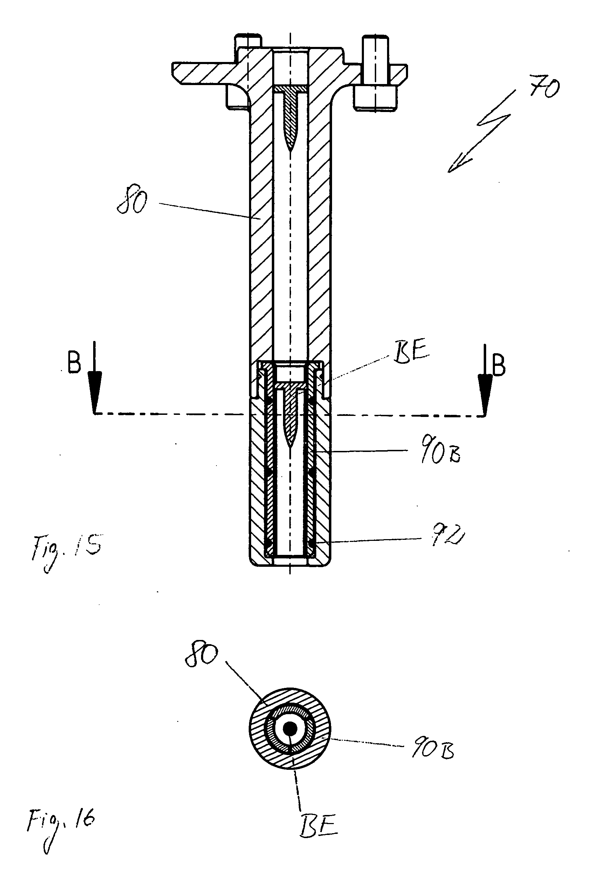

Gemäß einer weiteren Ausführungsform ist der Zuführkanal 70 mit Bremsbacken 90B an Stelle der oben beschriebenen Stege 90 ausgestattet. Eine bevorzugte Ausführungsform ist in Fig. 15 in einem Längsschnitt dargestellt, während Fig. 16 einen Querschnitt durch den hohlzylindrischen Kanal 80 mit Bremsbacken 90B zeigt. Wie man in Fig. 15 sieht, umfasst der Zuführkanal 70 den hohlzylindrischen Kanal 80, in den das Befestigungselement BE an seinem in der Fig. 15 dargestellten oberen Ende eintritt. Nahe dem in der Fig. 15 dargestellten unteren Ende des Zuführkanals 70 befindet sich die Anordnung der Bremsbacken 90B. Diese Bremsbacken sind in gleicher Weise wie die oben beschriebenen Stege 90 in Richtung des Inneren des hohlzylindrischen Kanals 90 mit Hilfe von Federn 92 vorgespannt. Geeignete Federn 92 sind beispielsweise Federringe oder eine Spiralfeder.

Fig. 16 zeigt den Querschnitt des Zuführkanals 70 entlang der Linie B-B aus Fig. 15. Während am Bezugszeichen 80 der hohlzylindrische Kanal zu erkennen ist, sind an dessen Innenseite drei Bremsbacken 90B angeordnet. Diese decken jeweils etwa ein Drittel der inneren Umfangsfläche des hohlzylindrischen Kanals 80 ab. Es ist ebenfalls bevorzugt, zwei Bremsbacken 90B oder mehr als drei Bremsbacken 90B innerhalb des hohlzylindrischen Kanals 80 anzuordnen. Wie man in Fig. 15 zudem erkennen kann, weisen die verschiedenen Bremsbacken 90B die gleiche Länge auf. Sie erstrecken sich zudem über einen Bruchteil der Länge des hohlzylindrischen Kanals 80. Die Länge der Bremsbacken 90B und somit der zur Verfügung stehenden Bremsstrecke muss ausreichend sein, um das dem hohlzylindrischen Kanal 80 zugeführte Befestigungselement BE abzubremsen oder sogar vollständig zum Halten zu bringen. Basierend auf diesen Anforderungen ist die Länge der Bremsstrecke und somit der Bremsbacken 90B wie auch der oben beschriebenen Stege 90 optimal anpassbar. Neben diesen allgemeinen Eigenschaften weisen die Bremsbacken 90B die gleichen Eigenschaften auf, wie sie in Verbindung mit den Stegen 90 oben beschrieben worden sind.

Es wird zudem ein Zuführkanal 70 offenbart, der nicht mit einer mechanischen Bremsanordnung für die Befestigungselemente BE ausgestattet ist. Stattdessen erfolgt das Abbremsen der Befestigungselemente BE durch die im hohlzylindrischen Kanal 80 befindliche und aufgestaute Luft, die einen der Bewegung des Befestigungselements BE entgegenwirkenden Druck aufbaut. Eine Ausführungsform dieses Zuführkanals 70 besteht darin, dass das Mundstück 70 lediglich den hohlzylindrischen Kanal 80 umfasst (nicht gezeigt).

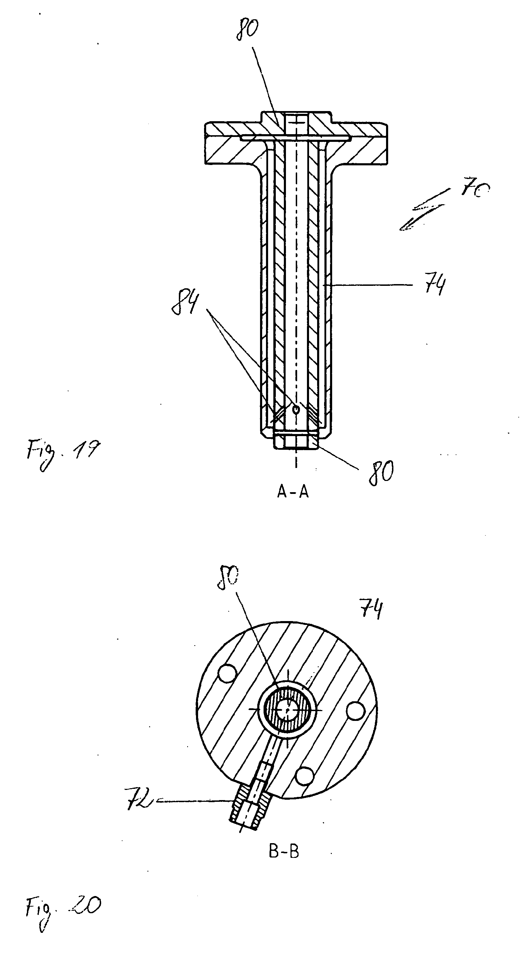

Während des Setzens von Befestigungselement BE setzt das offene Ende des Zuführkanals 70 auf der Werkstückoberfläche auf. Dadurch wird das offene Ende des Zuführkanals 70 annährend luftdicht verschlossen. Wird nun ein Befestigungselemente BE in den hohlzylindrischen Kanal 80 bewegt, wird die Luft im hohlzylindrischen Kanal 80 zwischen Befestigungselement BE und offenem Ende des Zuführkanals 70 bzw. des hohlzylindrischen Kanals 80 komprimiert. Mit der Bewegung des Befestigungselements BE in Richtung des offenen Endes des hohlzylindrischen Kanals 80 nimmt die Kompression der Luft zu. Dadurch steigt der der Bewegung des Befestigungselements BE entgegenwirkende Staudruck der komprimierten Luft im hohlzylindrischen Kanal 80. Dies gewährleistet, dass das Befestigungselement BE im Zuführkanal 70 abgebremst wird. Das Abbremsen ist soweit realisierbar, dass der nacheilende Stempel S am Befestigungselement BE in Anlage kommt, dadurch das Befestigungselement BE ausrichtet und dann fügt. Des Weiteren ist es bevorzugt, einen derartigen Staudruck zwischen Befestigungselement BE und Bauteiloberfläche im hohlzylindrischen Kanal 80 zu erzeugen, dass das Befestigungselement BE im hohlzylindrischen Kanal 80 vollständig aufgehalten wird. Zu diesem Zweck ist es ebenfalls denkbar, das Abbremsen mittels Staudruck in Kombination mit einer oben beschriebenen mechanischen Bremsstrecke einzusetzen. Gemäß einer weiteren Ausgestaltung sind nahe dem Ende des hohlzylindrischen Kanals 80, der an das Bauteil angrenzt, einer oder mehrere Druckluftkanäle vorgesehen. Diese Druckluftkanäle sind beispielgebend in Fig. 19 am Bezugszeichen 84 dargestellt. Es ist ebenfalls denkbar, diese Druckluftkanäle 84 in radialer Richtung von der Innen- zur Außenseite des hohlzylindrischen Kanals 80 verlaufen zu lassen. Diese Druckluftkanäle 84 werden in dieser Ausführungsform mit einer Drossel bzw. einem Drosselventil ausgestattet, das bei einem einstellbaren Staudruck die Druckluftkanäle 84 öffnet, während sie zuvor verschlossen sind. Mit Hilfe dieser Drossel ist die Stärke des Staudrucks innerhalb des hohlzylindrischen Kanals 80 zwischen Befestigungselement BE und Bauteiloberfläche gezielt einstellbar. Dies gewährleistet, dass das Befestigungselement mit vordefiniertem Staudruck abbremsbar und sogar aufhaltbar ist. Zudem gewährleistet diese Drossel, dass während eines nachfolgenden Setzvorgangs der Staudruck zwischen Befestigungselement BE und Bauteiloberfläche über die Druckluftkanäle 84 abgelassen wird und dadurch nicht das Setzen des Befestigungselements BE im Bauteil behindert.

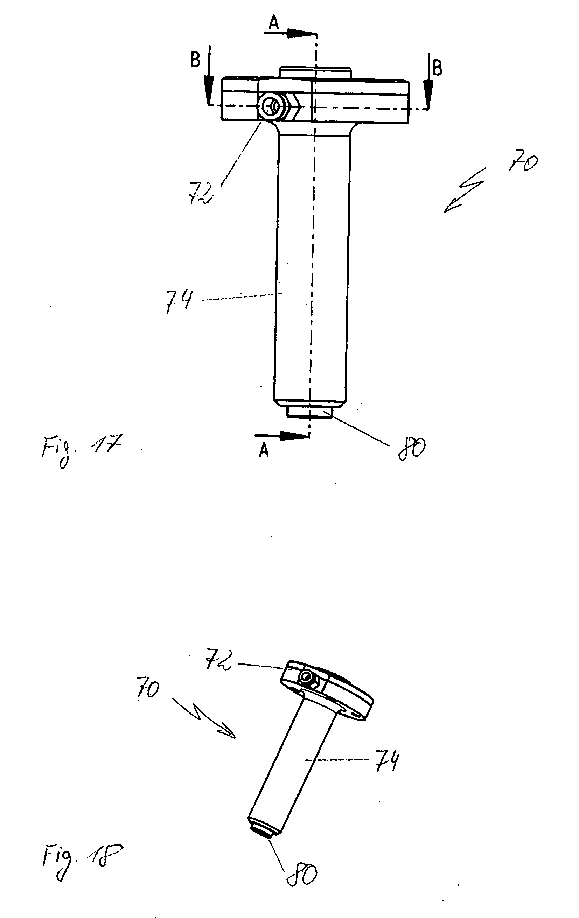

Ein weiterer mit Gegenluft zum Abbremsen des Befestigungselements BE arbeitender Zuführkanal 70 ist in den Figuren 17 bis 20 gezeigt. Der Zuführkanal 70 umfasst ebenfalls einen hohlzylindrischen Kanal 80, in dem keine Bremsstege 90 oder Bremsbacken 90B angeordnet sind. Der Zuführkanal 70 umfasst stattdessen einen Druckluftanschluss 72, der sowohl nahe dem ersten (s. Fig. 17) wie auch nahe dem zweiten Ende des hohlzylindrischen Kanals 80 angeordnet sein kann. Der Druckluftanschluss 72 verbindet eine Druckluftquelle (nicht gezeigt) mit einem Druckluftreservoir 74.

Aus dem Druckluftreservoir 74 wird über einen oder eine Mehrzahl von Druckluftkanälen 84 Luft in den hohlzylindrischen Kanal 80 eingeblasen. Es ist ebenfalls bevorzugt, den Druckluftanschluss 72 direkt mit den Druckluftkanälen 84 zu verbinden.

Fig. 19 zeigt einen Schnitt durch den Zuführkanal 70 aus Fig. 17 entlang der Linie A-A. Der hohlzylindrische Kanal 80 ist mittig angeordnet. In koaxialer Anordnung zum hohlzylindrischen Kanal 80 befindet sich das Druckluftreservoir 74. Es stellt einen Speicher für Druckluft angrenzend an den hohlzylindrischen Kanal 80 bereit. Nahe dem zweiten, dem Setzgerät abgewandten Ende des Zuführkanals 70 umfasst der hohlzylindrische Kanal 80 eine Mehrzahl von Druckluftkanälen 84. Während ein Druckluftkanal 84 ausreichend wäre, werden vorzugsweise mehrere Druckluftkanäle 84 eingesetzt. Diese Druckluftkanäle 84 sind gleichmäßig auf die Umfangsfläche des hohlzylindrischen Kanals 80 verteilt. In dem in Fig. 19 gezeigten Beispiel des Zuführkanals 70 sind vier Druckluftkanäle 84 vorgesehen.

Die Druckluftkanäle 84 verlaufen in radialer Richtung auf die Mitte des hohlzylindrischen Kanals 80 zu und verbinden dadurch das Druckluftreservoir 74 mit dem Inneren des hohlzylindrischen Kanals 80. Zudem sind die Druckluftkanäle 84 bevorzugt in Richtung des dem Setzgerät zugewandten Endes des hohlzylindrischen Kanals 80 - in Fig. 17 bis 19 das oben dargestellte Ende des hohlzylindrischen Kanals 80 - geneigt angeordnet. Auf diese Weise ist Druckluft entgegen der Bewegung des Befestigungselements BE im Zuführkanal 70 in den hohlzylindrischen Kanal 80 einblasbar.

Über die in den hohlzylindrischen Kanal 80 eingeblasene Druckluft baut sich ein Gegendruck auf, der der Bewegung des Befestigungselements BE im Zuführkanal 70 entgegenwirkt. Auf diese Weise wird das Befestigungselement BE abgebremst, während sich über die Höhe des Luftdrucks die Stärke des Abbremsens des Befestigungselements BE einstellen und kontrollieren lässt. Daher ist auch die mit Gegenluft realisierte Bremsstrecke für Befestigungselemente optimal auf die zu setzenden Befestigungselemente BE anpassbar.

Daraus folgt, dass mit dieser Konstruktion die gleiche Funktionalität wie die der Zuführkanäle 70 mit Bremsstegen 90 oder Bremsbacken 90B realisierbar ist. Zur weiteren Veranschaulichung der Konstruktion zeigt Fig. 20 einen Schnitt entlang der Linie B-B in Fig. 17. Es ist erkennbar, wie der Druckluftanschluss 72 mit dem Druckluftreservoir 74 an dem dem Setzgerät zugewandten Ende des Zuführkanals 70 verbunden ist.

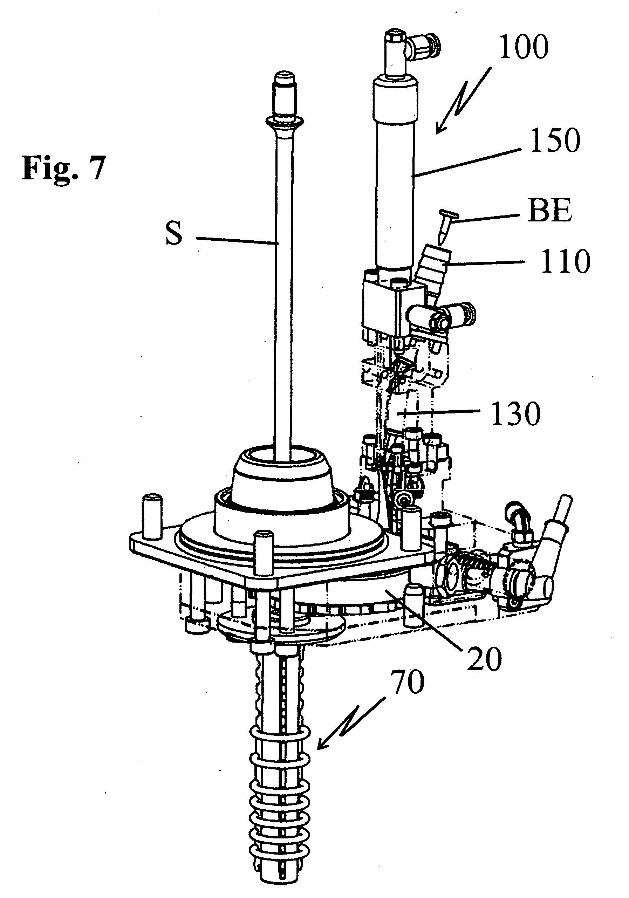

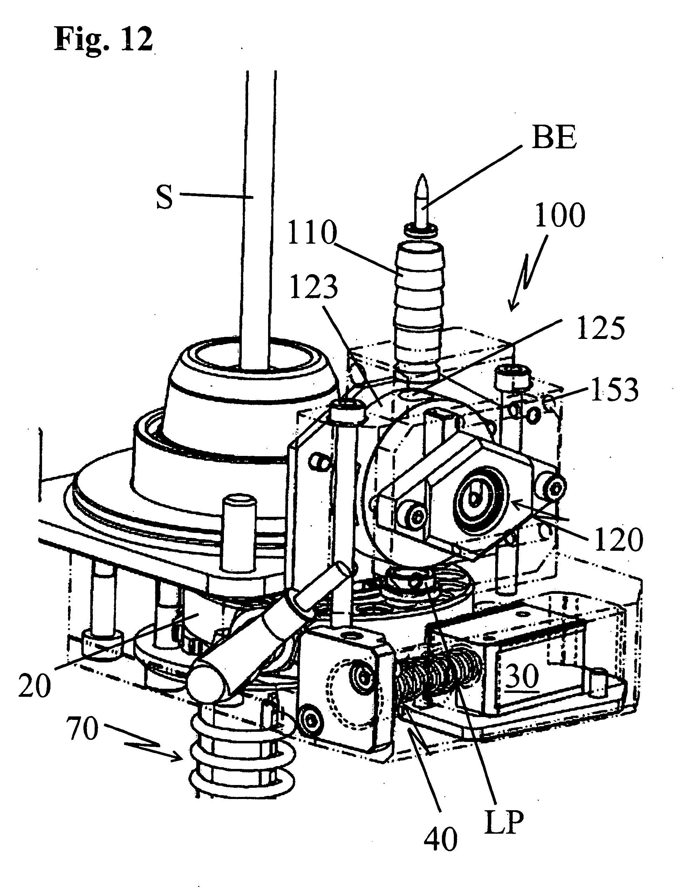

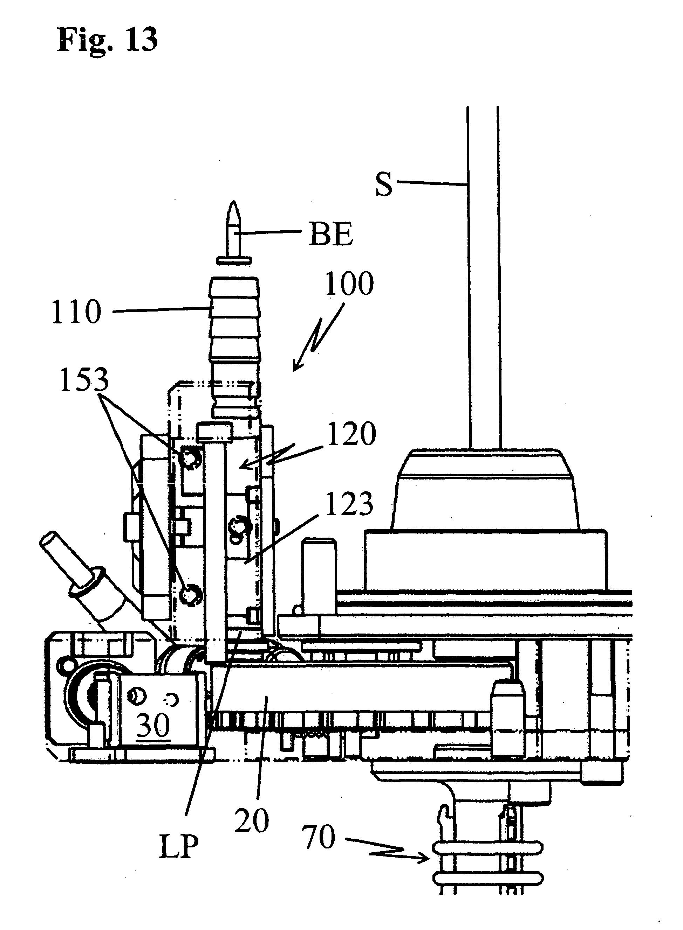

Gemäß einer weiteren Ausgestaltung ist das Setzgerät oder die Zuführvorrichtung mit einer Ladevorrichtung 100 ausgestattet. Bevorzugte Ausführungsformen dieser Ladevorrichtung sind in den Figuren 7 bis 13 dargestellt. Die Ladevorrichtung 100 arbeitet in Kombination mit dem Träger 10; 20 der Zuführvorrichtung. Im weiteren Verlauf der Beschreibung werden Funktion und Aufbau der Ladevorrichtung 100 am Beispiel ihres Zusammenwirkens mit dem Rotationsmagazin 20 näher erläutert. Es ist ebenfalls denkbar, die wesentlichen Elemente dieser Ladevorrichtung in Kombination mit dem Streifenmagazin 10 einzusetzen.

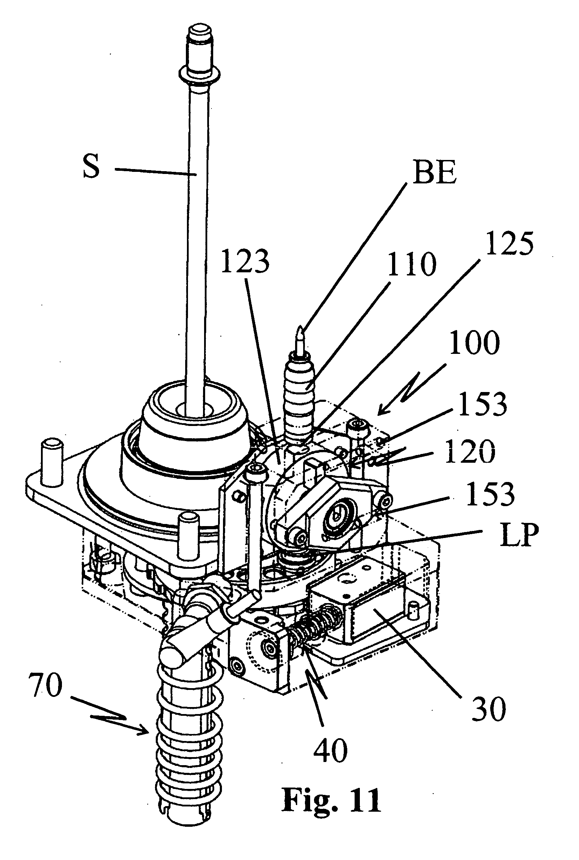

Mit der Ladevorrichtung 100 ist mindestens ein Befestigungselement BE, vorzugsweise Nieten, Bolzen, Nägel, einzeln der Halteposition 22 des Rotationsmagazins 20 zuführbar bzw. in dieses ladbar. Zu diesem Zweck umfasst die Ladevorrichtung 100 einen Bereitstellungskanal 110, über den eine Mehrzahl von Befestigungselementen BE der Ladevorrichtung 100 bereitstellbar ist. In den Figuren 7, 11 bis 13 ist der Bereitstellungskanal 110 verkürzt dargestellt. Er wird beispielsweise durch eine flexible Zuleitung gebildet, in der Befestigungselemente BE aneinandergereiht der Ladevorrichtung zuführbar sind. Es ist ebenfalls bevorzugt, die Befestigungselemente BE einzeln über den Bereitstellungskanal 110 der Ladevorrichtung 100 zuzuführen. Sie werden beispielsweise mit Druckluft oder über ein anderes geeignetes Beschleunigungsmittel im Bereitstellungskanal 110 in Richtung Ladevorrichtung 100 beschleunigt, um dann einzeln weiter dem Setzgerät zugeführt zu werden. Es ist bevorzugt, die Befestigungselemente BE koaxial mit einer Längsachse des Bereitstellungskanals 110 auszurichten, um eine einfache Positionierung der Befestigungselemente BE für die weitere Zufuhr zum Fügevorgang zu unterstützen. Gemäß der in den Figuren 7 bis 10 dargestellten Ausführungsform werden die Befestigungselemente BE, beispielsweise Nägel, mit dem Schaft voran über den Bereitstellungskanal 110 zugeführt. In der in den Figuren 11 bis 13 dargestellten Ausführungsform werden die Befestigungselemente BE, vorzugsweise Nägel, mit dem Kopf zuerst der Ladevorrichtung 100 zugeführt.

Der Bereitstellungskanal 110 führt die Mehrzahl der Befestigungselemente BE einer Vereinzelungsanordnung 120 zu. Wie sich aus den Figuren 7 bis 13 ergibt, sind verschiedene Ausführungsformen der Vereinzelungsanordnung 120 einsetzbar. Grundsätzlich dient die Vereinzelungsanordnung 120 dazu, aus der über dem Bereitstellungskanal 110 zugeführten Mehrzahl von Befestigungselementen BE mindestens ein Befestigungselement BE zu vereinzeln, so dass dieses individuell in die Halteposition 22 des Rotationsmagazins 20 überführbar ist. Die Vereinzelungsanordnung 120 arbeitet neben dem Bereitstellungskanal 110 ebenfalls mit einer Übergabeanordnung 150 zusammen. Die Übergabeanordnung 150 ist konstruktiv auf unterschiedliche Weise ausgeführt, wie unten näher erläutert wird. Sie dient dazu, das vereinzelte Befestigungselement BE an das Rotationsmagazin 20 und im Speziellen an die Halteposition 22 zu übergeben, so dass diese Halteposition 22 mit dem zuvor vereinzelten Befestigungselement BE beladen ist.

Gemäß der in den Figuren 7 bis 10 dargestellten Ausführungsform der Ladevorrichtung 100 umfasst die Vereinzelungsanordnung 120 einen krummlinig verlaufenden Kanal 130. Dieser ist direkt mit dem bereits oben diskutierten Bereitstellungskanal 110 verbunden, so dass die Mehrzahl an Befestigungselementen BE in Längsrichtung des krummlinig verlaufenden Kanals 130 orientiert in diesem transportiert werden. Dies ist durch die Befestigungselemente BE veranschaulicht, von denen drei Stück im krummlinig verlaufenden Kanal 130 in den Figuren 7 bis 9 dargestellt sind.

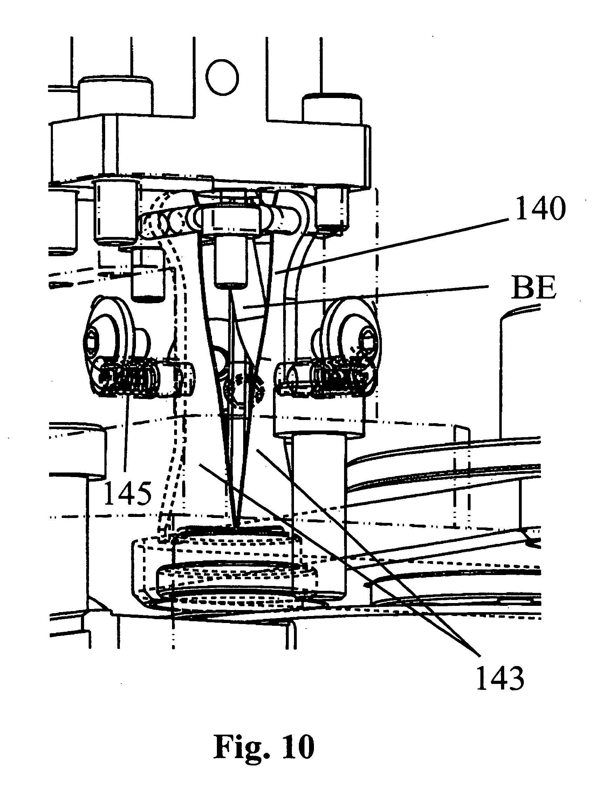

Der krummlinig verlaufende Kanal 130 ist derart ausgebildet, dass sein dem Rotationsmagazin 20 zugewandtes Ende 135 nicht koaxial mit seinem an den Bereitstellungskanal 110 anknüpfenden Ende ausgerichtet ist. An seinem Ende 135 mündet der krummlinig verlaufende Kanal 130 in eine Bremsbackenanordnung 140. Die Bremsbackenanordnung 140, die vergrößert in Fig. 10 dargestellt ist, dient dem Abbremsen und Zwischenstoppen der Befestigungselemente BE, die vorzugsweise mit hoher Geschwindigkeit und Frequenz über den Bereitstellungskanal 110 und den krummlinig verlaufenden Kanal 130 zugeführt werden. Die Zufuhr erfolgt in diesem Fall in einem Geschwindigkeitsbereich von 0,2 bis mehreren m/s. Sobald das vorderste der zugeführten Befestigungselemente BE in der Bremsbackenanordnung 140 aufgehalten worden ist, befindet es sich in Bereitschaft, um einzeln in das Rotationsmagazin 20 überführt zu werden.

Um die Befestigungselemente BE verlässlich abbremsen und aufhalten zu können, umfasst die Bremsbackenanordnung 140 eine Mehrzahl von Bremsbacken 143 (vgl. Fig. 10). Diese Bremsbacken 143 sind bevorzugt einseitig und um diesen Punkt schwenkbar befestigt. Aufgrund dieser Befestigung können die Bremsbacken in radialer Richtung in den krummlinig verlaufenden Kanal 130 bzw. in dessen Fortsetzung hinein verschwenken, um dessen Querschnitt geeignet zu verengen. Zu diesem Zweck sind die Bremsbacken 143 federnd vorgespannt, so dass einerseits das ankommende Befestigungselement BE zwischen diesen Bremsbacken 143 aufgehalten wird und andererseits diese Bremsbacken 143 gegen die wirkende Federkraft aus dem Kanal drücken kann, um sich dadurch weiterbewegen zu können. Eine beispielgebende Anordnung zur Federvorspannung der Bremsbacken 143 ist am Bezugszeichen 145 gezeigt. Die Bremsbacken 143 verengen damit auf gleiche Weise wie die Stege 90 des Zuführkanals 70 den Zufuhrweg der Befestigungselemente BE. Zudem sind die Konstruktionsaltemativen der Stege 90 (siehe oben) in gleicher Weise auf die Bremsbacken 143 anwendbar.

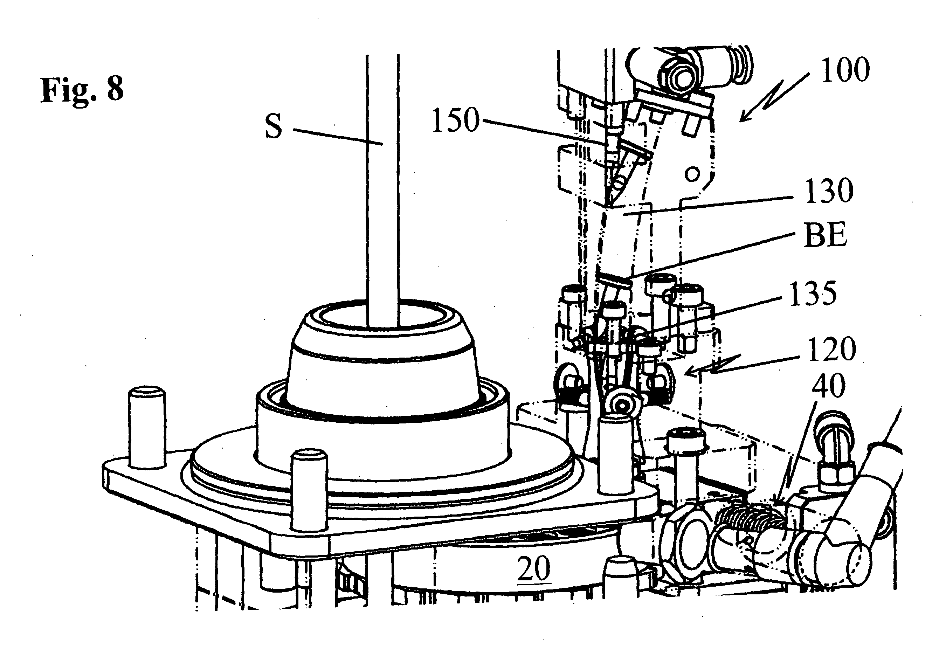

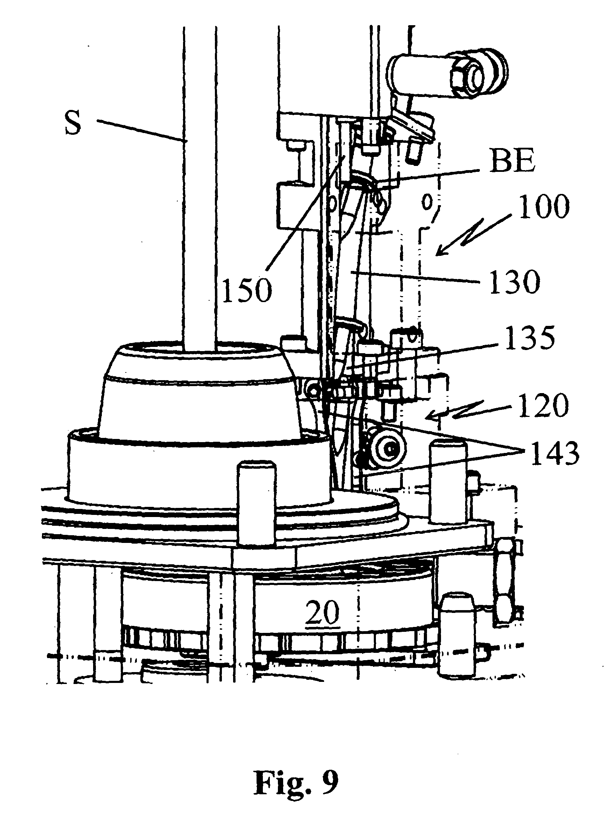

Sobald das vorderste Befestigungselement BE in der Bremsbackenanordnung 140 aufgehalten worden ist und an dieser Stelle festgehalten wird, verschiebt die Übergabeanordnung 150 das Befestigungselement BE aus der Bremsbackenanordnung 140 in die Halteposition 22 des Rotationsmagazins 20. Die Übergabeanordnung 150 wird vorzugsweise durch ein Stellelement realisiert, das beispielsweise aus einer pneumatischen Kolben-Zylinder-Anordnung besteht. Das Ende des Kolbens des Stellelements ist in den Figuren 8 und 9 am Bezugszeichen 150 dargestellt.

Aufgrund des Verlaufs des krummlinig verlaufenden Kanals 130 durchgreift der Kolben der pneumatischen Kolben-Zylinder-Anordnung 150 lediglich die Bremsbackenanordnung 140, um das dort festgehaltene Befestigungselement BE in das Rotationsmagazin 20 zu überführen. Es ist daher aufgrund der Form des krummlinig verlaufenden Kanals 130 nicht erforderlich, dass der Kolben 150 den krummlinig verlaufenden Kanal 130 durchläuft. Neben einer pneumatischen Kolben-Zylinder-Anordnung 150 ist als Stellelement ebenfalls eine elektromechanisch, mechanisch, elektromagnetisch oder piezoelektrisch arbeitende Konstruktion denkbar, sofern sie die allgemeinen Anforderungen an das Stellelement 150 erfüllt. Greift somit der Kolben 150 durch die Bremsbackenanordnung 150, um das Befestigungselement BE dem Rotationsmagazin 20 zuzuführen, werden die nachgeordneten Befestigungselemente BE im krummlinig verlaufenden Kanal 130 blockiert, so dass sie nicht in die Bremsbackenanordnung 140 transportiert werden können. Erst wenn der Kolben 150 zurückgezogen worden ist, wird die Bremsbackenanordnung 140 freigegeben, um einen erneuten Vereinzelungsprozess durchführen zu können.

Eine weitere bevorzugte Ausführungsform der Ladevorrichtung 100 ist in den Figuren 11 bis 13 dargestellt. Neben dem bereits erläuterten Bereitstellungskanal 110 (s. oben) umfasst die Ladevorrichtung 100 als Vereinzelungsanordnung 120 eine drehbar angeordnete Aufnahme 123. Diese drehbare Aufnahme 123 ist mit mindestens einer radial ausgerichteten Kammer 125 ausgestattet. Diese radial ausgerichtete Kammer 125 ist in ihrer Dimension derart angepasst, dass sie ein Befestigungselement BE in annähernd koaxialer Ausrichtung zur Längsachse der Kammer 125 aufnehmen kann. Die drehbare Aufnahme 123 umfasst mindestens eine dieser radial ausgerichteten Kammern 125, während ebenfalls zwei gegenüberliegende radial ausgerichtete Kammern 125 oder eine Mehrzahl von entlang eines Umfangs der drehbaren Aufnahme 123 gleichmäßig beabstandeter radial ausgerichteter Kammern 125 denkbar sind.

In den Figuren 11 bis 13 ist die drehbare Aufnahme 123 als Drehscheibe realisiert. Diese umfasst zwei gegenüberliegende radial ausgerichtete Kammern 125, in die jeweils ein Befestigungselement BE aufnehmbar ist. Sobald über den Bereitstellungskanal 110 ein Befestigungselements BE in die am Ende des Bereitstellungskanals 110 angeordnete radial ausgerichtete Kammer 125 gelangt ist, wird die Drehscheibe bzw. die drehbare Aufnahme 123 um 180° um ihre Drehachse gedreht. Dies bringt die radial ausgerichtete Kammer 125 mit Befestigungselement BE in Ausrichtung mit der Ladeposition LP des Rotationsmagazins 20. Durch die Drehung der drehbaren Aufnahme 123 ist somit jede radial ausgerichtete Kammer 125 vor dem Ende des Bereitstellungskanals 110 sowie an der Ladeposition LP des Rotationsmagazins 20 anordenbar. Wird eine Mehrzahl von radial ausgerichteten Kammern 125 entlang der Umfangsrichtung der Drehscheibe 123 verwendet, werden schrittweise die einzelnen radial ausgerichteten Kammern 125 in Ausrichtung mit der Ladeposition LP des Rotationsmagazins 20 gebracht, um mit hoher Frequenz die jeweils in den radial ausgerichteten Kammern 125 enthaltenen Befestigungselementen BE dem Rotationsmagazin 20 zuzuführen.

Um die Übergabe des Befestigungselements BE aus der drehbaren Aufnahme 123 in das Rotationsmagazin 20 zu realisieren, wird das jeweilige Befestigungselement BE mittels Druckluft, mechanisch, elektromechanisch, elektromagnetisch und/oder piezoelektrisch in die Halteposition 22 des Rotationsmagazins 20 versetzt. In der hier dargestellten Ausführungsform ist es bevorzugt, an die radial ausgerichtete Kammer 125 einen Druckluftkanal 153 anzuschließen, der wiederum mit einer Druckluftquelle (nicht gezeigt) verbunden ist. Sobald die radial ausgerichtete Kammer 125 mit der Ladeposition LP ausgerichtet ist, erzeugt die Druckluftquelle über den Druckluftkanal 153 einen Druckluftimpuls auf das in der Kammer 125 enthaltene Befestigungselement BE, so dass dieses in die Halteposition 22 des Rotationsmagazins 20 bewegt wird. Durch die Anwendung von Druckluft oder eines anderen Beschleunigungsmittels auf das Befestigungselement BE ist gewährleistet, dass das Befestigungselement BE nicht durch die Schwerkraft überführt werden muss. Zudem wird durch diese Beschleunigungsmittel erreicht, dass die Befestigungselemente BE in möglichst kurzer Zeit in das Rotationsmagazin 20 überführt werden.

Es ist somit bevorzugt, ein Setzgerät bereitzustellen, das eine Zuführvorrichtung 1 und/oder einen Zuführkanal 70 und/oder eine Ladevorrichtung 100 aufweist, wie sie oben beschrieben worden sind. Eine Ausführungsform offenbart zudem ein Setzgerät, in dem oberhalb des Rotationsmagazins 20 ein Speichermagazin (nicht gezeigt) angeordnet ist, in dem eine Mehrzahl von Befestigungselementen aufnehmbar und aus dem die Befestigungselemente in das Rotationsmagazin abgebbar sind. Eine bevorzugte Konstruktion des Speichermagazins ist in seiner Form wie das oben beschriebene Rotationsmagazin 20 aufgebaut, mit dem Unterschied, dass das Speichermagazin länger ausgebildet ist als das Rotationsmagazin 20. Daher besteht die Möglichkeit, in den Haltepositionen des Speichermagazins parallel zur Längsachse des Speichermagazins mehrere hintereinander angeordnete Befestigungselemente BE aufzunehmen. Das Speichermagazin wird innerhalb des Setzgeräts derart oberhalb des Rotationsmagazins 20 angeordnet, dass ein einzelnes Befestigungselemente BE aus mindestens einer Halteposition des Speichermagazins in mindestens eine Halteposition 22 des Rotationsmagazins überführbar ist. Diese Überführung der Befestigungselemente BE kann sowohl mittels Schwerkraft als auch mit Hilfe von Druckluft, mechanisch, elektromechanisch, elektromagnetisch und/oder piezoelektrisch erfolgen. Daher sind die Drehachsen von Speichermagazin und Rotationsmagazin 20 vorzugsweise parallel zueinander ausgerichtet.

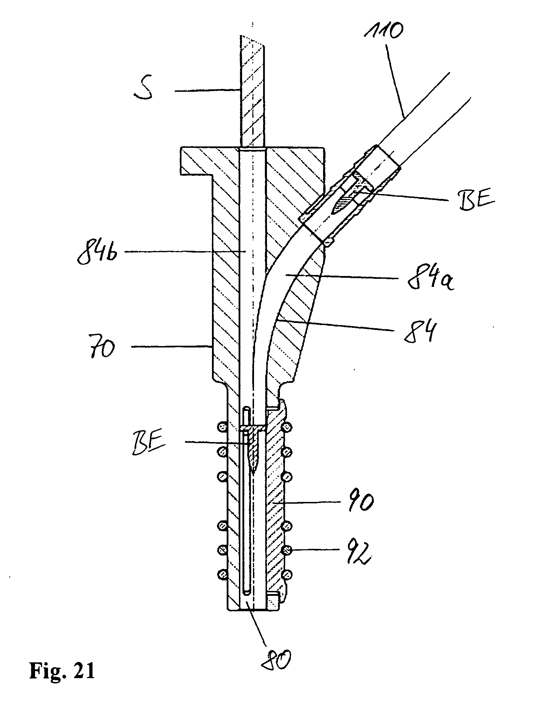

Eine Ausführungsform offenbart eine weitere Ladevorrichtung, die exemplarisch in Fig. 21 dargstellt ist. Im Gegensatz zur Ausführungsform aus Fig. 7 ist hier der Bereitstellungskanal 110 ohne zwischengeordnete Träger- oder Magazinanordnung mit dem Zuführkanal 70 verbunden oder verbindbar. Zudem ist die im Folgenden beschriebene Ladevorrichtung mit jedem Zuführkanal 70 mit Gegenluft-Bremsstrecke oder mechanischer Bremsstrecke kombinierbar, obwohl in Fig. 21 beispielgebend nur ein Zuführkanal 70 mit Bremsstegen 90 dargestellt ist.

Über den Bereitstellungskanal 110 sind die Befestigungselemente BE einzeln dem hohlzylindrischen Kanal 80 des Zuführkanals 70 zuführbar. Die Befestigungselemente BE sind bereits lagerichtig im Bereitstellungskanal 110 angeordnet, d.h. sie sind derart orientiert, wie sie dann auch durch den Stempel S des Setzgeräts gefügt werden sollen.

Gemäß einer ersten Alternative ist der Bereitstellungskanal 110 permanent mit dem Zuführkanal 70 verbunden und mündet direkt in den hohlzylindrischen Kanal 80 (vgl. Fig. 21). Gemäß einer zweiten Alternative (nicht gezeigt) werden Zuführkanal 70 und Bereitstellungskanal 110 nur zeitweise zur Zufuhr eines Befestigungselements BE miteinander verbunden.

Zur Realisierung der ersten Alternative umfasst der Zuführkanal 70 eine Y-förmige Verzweigung 84 des hohlzylindrischen Kanals 80. Über den ersten Zweig 84a der Y-förmigen Verzweigung 84 ist der Bereitstellungskanal 110 ständig mit dem hohlzylindrischen Kanal 80 und daher mit der Bremsstrecke verbunden. Durch den zweiten Zweig 84b der Y-förmigen Verzweigung 84 fügt der Stempel S das im Zuführkanal 70 befindliche Befestigungselement BE. Das Befestigungselement BE ist daher über den Bereitstellungskanal 110 und den ersten Zweig 84a der Y-förmigen Verzweigung 84 direkt in den Zuführkanal 70 in eine passende Position zum Setzen bewegbar. Sobald das Befestigungselement BE den Zuführkanal 70 erreicht, wird es in der Bremsstrecke, beispielsweise mechanisch oder mit Druckluft, abgebremst. Das Abbremsen in der Bremsstrecke ist auf die Bewegung des nacheilenden Stempels S abgestimmt, so dass das Befestigungselement BE geregelt einzeln zuführbar und dann setzbar ist.

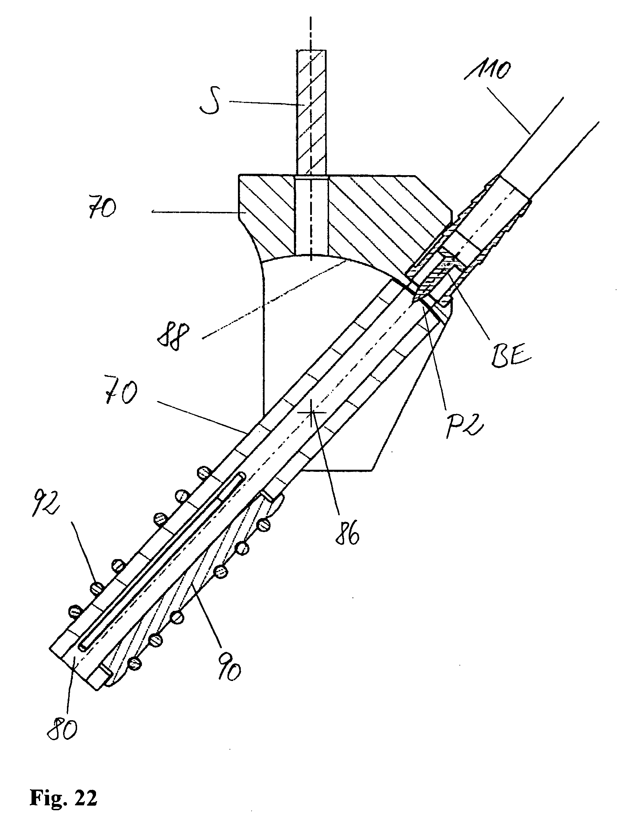

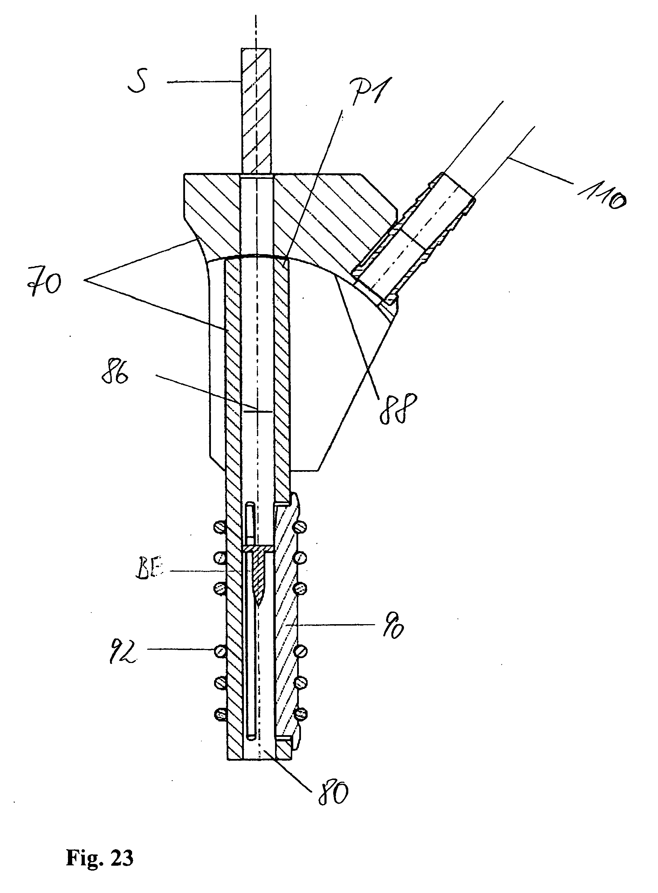

In der zweiten Alternative der Ladevorrichtung (siehe Fig. 22, 23) wird ein Zuführkanal 70 mit Bremsstrecke ohne Y-förmige Verzweigung verwendet. Die Ladevorrichtung weist aber, wie in Fig. 22, 23 dargestellt, den hohlzylindrischen Kanal 80 und einen Anschluss an den Bereitstellungskanal 110 auf. Um eine zeitweise Verbindung zwischen Bereitstellungskanal 110 und Zuführkanal 70 herstellen zu können, wird der Zuführkanal 70 vorzugsweise um einen Drehpunkt 86 geschwenkt.

Die Schwenkbewegung bewegt das dem Setzgerät zugewandte Ende des Zuführkanals 70 bzw. des hohlzylindrischen Kanals 80 zwischen einer ersten P1 und einer zweiten Position P2. In der ersten Position P 1 ist der hohlzylindrische Kanal 80 auf den Stempel S ausgerichtet, so dass sich der Stempel S zum Fügen in den hohlzylindrischen Kanal 80 bewegen kann. Nachdem der Zuführkanal 70 um den Drehpunkt 86 entlang der gekrümmten Linie 88 verschwenkt worden ist (vgl. Fig. 22), befindet sich das dem Setzgerät zugewandte Ende des hohlzylindrischen Kanals 80 in der zweiten Position P2. In der zweiten Position P2 ist der hohlzylindrische Kanal 80 auf den Bereitstellungskanal 110 ausgerichtet, so dass ein Befestigungselement BE zuführbar ist. Sobald das Befestigungselement BE dem hohlzylindrischen Kanal 80 in der zweiten Position P2 zugeführt worden ist, bewegt sich das Befestigungselement BE in Richtung Bremsstrecke 90, 92. Dort wird es aufgehalten. Gleichzeitig mit oder nach dieser Bewegung des Befestigungselements BE schwenkt der hohlzylindrische Kanal 80 um den Drehpunkt 86 in die erste Position P1, in der der hohlzylindrische Kanal 80 auf den Stempel S ausgerichtet ist (vgl. Fig. 23). Nach Auslösung oder Start eines Setzvorgangs bewegt sich nun der Stempel S durch den hohlzylindrischen Kanal 80 und setzt das Befestigungselements BE aus der Bremsstrecke oder allgemein dem hohlzylindrischen Kanal 80 heraus in das Bauteil (nicht gezeigt).

Es ist ebenfalls bevorzugt, den Zuführkanal 70 zwischen erster P 1 und zweiter Position P2, also zwischen möglicher Setzbewegung des Stempels S und möglicher Zufuhr eines Befestigungselements BE in den Zuführkanal 70, zu versetzen, beispielsweise mittels einer geradlinigen Bewegung. Zu diesem Zweck ist der Bereitstellungskanal 110 derart ausgerichtet, dass er geradlinig in den hohlzylindrischen Kanal 80 mündet, sobald der Zuführkanal 70 die zweite Position erreicht hat. Gemäß einer weiteren Ausführungsform wird der Zuführkanal 70 durch eine kombinierte Dreh- und Translationsbewegung zwischen der ersten und zweiten Position bewegt.

Es wird zudem ein Verfahren zum Fügen von Befestigungselementen BE, insbesondere Nieten, Bolzen, Nägel und dergleichen, mit Hilfe des erfindungsgemäßen Setzgeräts offenbart. Die Setzgeräte werden gemäß einer bevorzugten Ausführungsform mit Hilfe eines Roboters bewegt, so dass sie großtechnisch einsetzbar sind und eine entsprechend hohe Anzahl von Fügestellen pro Zeiteinheit erzeugen können. Gemäß einer ersten Ausführungsform stellt der Roboter das Setzgerät oder wird allgemein das Setzgerät in Anlage mit einem der zu verbindenden Bauteile zugestellt. Weisen die zu verbindenden Bauteile nicht die gewünschte Maßhaltigkeit auf, werden sie durch die Zustellbewegung und Anlage des Setzgeräts vorgespannt. Es wird ebenfalls der Fall abgedeckt, dass Spalte, Abstände an der Fügestelle zwischen den zu verbindenden Bauteilen durch das Aufsetzen des Setzgeräts verringert oder beseitigt werden. Auf diese Weise werden die Bauteile in der Fügezone in Anlage gebracht. Das Setzgerät drückt somit gegen eins der zu verbindenden Bauteile, ohne dass ein extra bewegter Niederhalter des Setzgeräts die Bauteile gegeneinander vorspannt. Dieses definierte und elastische Zustellen und dadurch das Vorspannen der zu verbindenden Bauteile über das Setzgerät werden beispielsweise mit einem Pneumatikzylinder am Roboter des Setzgeräts realisiert, der beispielsweise bei einem seitlichen am Setzgerät angreifenden Roboter zwischen Setzgerät und Roboter angeordnet ist. An diesem Pneumatikzylinder ist eine maximale Anpressbelastung der zu verbindenden Bauteile durch das Setzgerät einstellbar, so dass die zu verbindenden Bauteile durch das angreifende Setzgerät nicht verformt werden. Es ist ebenfalls denkbar, dass der Pneumatikzylinder bei Überschreiten der Anpressbelastung nachgibt, um dadurch eine Beschädigung von Bauteil oder Setzgerät zu vermeiden. Ergänzend dazu ist der Pneumatikzylinder oder allgemein die Niederhalteranordnung derart ausgestaltet, dass sie bei überkritischen Reaktionskräften des Setzgeräts diese dämpft. Reaktionskräfte sind beispielsweise der Rückschlag des Setzgeräts während der Setzvorgänge. Ein Dämpfen dieser Reaktionskräfte schützt sowohl Setzgerät wie auch Roboter vor Beschädigungen. Das gezielte Zustellen des Setzgeräts bringt somit das Setzgerät in die gewünschte Position zum Einbringen des Befestigungselements BE und spannt gleichzeitig die zu verbindenden Bauteile vor, ohne dass zusätzliche Konstruktionen erforderlich sind. In diesem Zusammenhang ist ebenfalls beachtlich, dass nach Anlage des Setzgeräts an einem der zu verbindenden Bauteile das Setzgerät während des folgenden Fügevorgangs eine Niederhalterfunktion erfüllt. Auf diese Weise werden Verformungen gerade des oberen Bauteils in der Fügezone vermieden. Zu diesem Zweck besteht das auf das Bauteil aufsetzende Ende des Setzgeräts beispielsweise aus einem Rohrende, wie beispielsweise der Zuführkanal 70. Vorzugsweise ist das Rohrende mit Kunststoff überzogen, um eine Dämpfungs- und/oder Schutzwirkung zu erzielen. Es ist ebenfalls bevorzugt, am oder nahe dem aufsetzenden Ende des Setzgeräts eine federvorgespannte Hülse vorzusehen. Aufgrund einer festen oder einstellbaren Federkraft der federvorgespannten Hülse in Richtung des Bauteils und/oder in Richtung des Setzgeräts entlang der Translationsachse des Stempels des Setzgeräts lässt sich die Zustellbewegung des Setzgeräts verlässlich und genau ausführen, ohne zu Schädigungen an Bauteil oder Setzgerät zu führen.

Es ist ebenfalls denkbar, die elastische Zustellbewegung des Setzgeräts nicht über einen separaten Pneumatikzylinder sondern über den bereits oben erwähnten Roboter zu realisieren. Diese Funktion könnte durch den Roboter direkt erfolgen, sofern zwischen Roboter und Setzgerät eine federvorgespannte elastische Konstruktion als Niederhalteranordnung realisiert ist. Diese federvorgespannte elastische Konstruktion gleicht ähnlich einem Achsausgleichsschlitten beim Stanznieten axiale Bauteiltoleranzen aus. Auf diese Weise kann man sich die aktive siebte Achse des Roboters, d.h den oben diskutierten zusätzlichen Pneumatikzylinder, sparen und stattdessen die passive federvorgespannte elastische Konstruktion wartungsfrei nutzen. Allerdings wirkt dann je nach Winkellage von Roboter und Setzgerät und Fügerichtung, d.h. nach oben, unten oder in horizontaler Richtung, die Masse des Setzgerätes mit auf den Flansch bzw. die Fügestelle (Fügen nach unten) oder vom Flansch weg (Überkopf-Fügen). Aus diesem Grund ist es weiterhin bevorzugt, die federvorgespannte elastische Konstruktion ausreichend stark und in Anpassung an die zu erwartenden Belastungen durch die Masse des Setzgeräts auszulegen. Durch diese Konstruktion wird ein winkellagenunabhängiges Fügen unterstützt, was durch eine Doppelfederlösung mit zwei hintereinander angeordneten vorgespannten Federn realisierbar ist.

Nach dem Zustellen wird durch das Setzgerät das Befestigungselement BE in die zu verbindenden Bauteile eingebracht.

Unabhängig von der Wahl der unterschiedlichen Verfahrensalternativen ist es bevorzugt, dass das Befestigungselement BE vor dem Setzen durch den Stempel S mit Hilfe einer Bremsstrecke im Zuführkanal abgebremst wird. Das Abbremsen in der Bremsstrecke gewährleistet, dass der nacheilende Stempel S an dem Befestigungselement BE in Anlage kommt und dadurch das Befestigungselement BE vor dem Setzen im Bauteil ausrichtet. Es erfolgt somit gemäß einer ersten Alternative als weiterer Verfahrensschritt ein Abbremsen des einzubringenden Befestigungselements BE innerhalb eines Zuführkanals 70 mittels Reibung zwischen dem Befestigungselement BE und einer Bremsstrecke des Zuführkanals 70. Da das Abbremsen auf Reibung basiert, werden beispielsweise Bremsstege 90 oder Bremsbacken 90b eingesetzt. Gemäß einer weiteren Alternative erfolgt das Abbremsen mittels Gegenluft unter Einsatz der oben beschriebenen Zuführkanäle 70. Wird die Gegenluft eingeblasen, ist dieses Abbremsen sowohl für Verfahren mit und ohne Aufsetzen auf dem Bauteil realisierbar. Erfolgt das Abbremsen allein durch Staudruck ohne eingeblasene Gegenluft, ist es erforderlich, dass der Zuführkanal vor dem Setzen des Befestigungselements auf dem Bauteil aufsitzt und dadurch das offene Ende des Zuführkanals annähernd luftdicht verschließt. Bei dieser Alternative weist das Verfahren somit den weiteren Schritt auf: Abbremsen des einzubringenden Befestigungselements BE innerhalb des Zuführkanals 70 mittels Gegenluft, wobei Druckluft in den Zuführkanal 70 gegen die Setzbewegung des Befestigungselements eingeblasen wird oder aufgrund der Anlage des Setzgeräts am Bauteil ein Staudruck im Zuführkanal 70 zwischen Befestigungselement BE und Bauteil erzeugt wird.

Gemäß einer weiteren Ausgestaltung des obigen Fügeverfahrens wird das Setzgerät zu jeder einzelnen Fügestelle separat zugestellt, so dass der Niederhalter des Setzgeräts, der nicht separat bewegbar ist, an einem der zu verbindenden Bauteile anliegt und diese vorspannt. Nach dem Einbringen des Befestigungselements BE wird das Setzgerät von der Fügestelle wieder abgehoben und zur nächsten Fügestelle bewegt. Somit erfolgt ein Unterbrechen einer Verfahrbewegung über mehrere Fügestellen an jeder einzelnen Fügestelle, um das jeweilige Befestigungselement BE einzubringen.

Es ist ebenfalls bevorzugt, das Setzgerät über eine Mehrzahl von Fügestellen zu bewegen, während der Niederhalter in Anlage mit einem der zu verbindenden Bauteile ist und diese vorspannt. Während dieser kontinuierlichen Bewegung des Setzgeräts über die mehreren Fügestellen wird an den einzelnen Fügestellen jeweils ein Befestigungselement BE eingebracht, ohne dass diese Bewegung des Setzgeräts unterbrochen wird. Dies hat den Vorteil, dass im Vergleich zu einer an jeder Fügestelle unterbrochenen Bewegung in der gleichen Zeiteinheit eine größere Anzahl von Fügestellen abgearbeitet werden kann. Um dieses Verfahren optimal zu realisieren, ist es beispielsweise bevorzugt, einen Niederhalter des Setzgeräts mit einem Rollfuß (nicht gezeigt) einzusetzen. Dieser in Form eines Rollfußes ausgebildete Niederhalter liegt ebenfalls an einem der zu verbindenden Bauteile an und spannt die zu verbindenden Bauteile gegeneinander vor. Während diese Vorspannung erhalten bleibt, ist der Rollfuß in der Lage, auf der Oberfläche des einen zu verbindenden Bauteils abzurollen und dabei die Vorspannung aufrecht zu erhalten. Mit Hilfe dieser abrollenden Bewegung des Niederhalters und der Aufrechterhaltung der Vorspannung der zu verbindenden Bauteile ist die Mehrzahl von Fügestellen ohne Unterbrechung der Bewegung abfahrbar, während an jeder Fügestelle ein Befestigungselement BE einbringbar ist.

Um das Setzen von Befestigungselementen BE zu erleichtern, ist der Rollfuß (nicht gezeigt) vorzugsweise mit einer Auslösefunktion ausgestattet. Die Auslösefunktion beinhaltet, dass in Abhängigkeit von der Abrollbewegung des Rollfußes auf dem Bauteil ein Auslösesignal erzeugt wird, das einen Setzvorgang eines Befestigungselements startet. Über den auf dem Bauteil abgerollten Umfang des Rollfußes ist somit die Entfernung zwischen benachbarten zu setzenden Befestigungselementen BE definierbar. Zudem übernimmt der Rollfuß das Auslösen des Setzvorgangs, so dass dies nicht mehr einzeln durch Roboter oder Nutzer durchgeführt werden muss. Auf dieser Grundlage muss der Roboter und/oder Nutzer nur noch den Verfahrweg des Setzgeräts vorgeben, entlang dessen das Setzgerät bewegt und die Befestigungselementen BE gesetzt werden sollen. Der Rollfuß gewährleistet auf diese Weise ein halbautomatisches Setzen von Befestigungselementen BE, wobei auch nur optional die Niederhalterfunktion mit dem Rollfuß realisiert werden muss.

Um die oben beschriebene Auslösefunktion umzusetzen, umfasst der Rollfuß ein drehbar gelagertes Rad, das über eine Anordnung an dem Setzgerät befestigbar ist. Diese Anordnung und somit das drehbar gelagerte Rad sind derart am Setzgerät angebracht, dass das Rad bei einer Bewegung des Setzgeräts auf der Oberfläche des Bauteils abrollt. Zudem umfasst der Rollfuß eine Auslöseanordnung in Verbindung mit dem Rad, die in Abhängigkeit von der Umdrehung des Rads und/oder der anteiligen Umdrehung des Rads ein Signal erzeugt, mit dem durch Abrollen des Setzgeräts auf dem Bauteil an voneinander beabstandeten Stellen des Bauteils jeweils ein Setzvorgang des Setzgeräts initiierbar ist, während der Abstand zwischen diesen Stellen durch den Abrollweg des Rads vorgegeben ist. Der Rollfuß stellt somit eine Auslösehilfe dar, die beispielsweise ein äquidistantes Setzen von Befestigungselementen BE in den zu fügenden Bauteilen gewährleistet. Mit dem Rad des Rollfußes ist ein Schalter in Abhängigkeit von der Umdrehung oder dem Anteil der Umdrehung des Rads betätigbar, um ein Signal in der Auslöseanordnung zum Starten des Setzvorgangs des Setzgeräts zu erzeugen.

Der Schalter und somit allgemein die Auslöseanordnung ist vorzugsweise mechanisch oder elektrisch ausgestaltet. Bei der mechanischen Auslöseanordnung umfasst das Rad einen oder eine Mehrzahl von Vorsprüngen, mit denen in Abhängigkeit von der Drehung des Rads ein Schalter betätigbar ist. Die Vorsprünge sind in ihrer Position bezogen auf den Umfang des Rads verstellbar angeordnet. Eine weitere Alternative besteht darin, dass das Rad des Rollfußes austauschbar und daher Räder mit verschiedenen Anordnungen von Vorsprüngen im Rollfuß einsetzbar sind. Der oder die Vorsprünge am Rad betätigen somit in Abhängigkeit von einer vollständigen oder einer anteiligen Umdrehung des Rads den Schalter der Auslöseanordnung. Dadurch wird in der Auslöseanordnung oder durch die Auslöseanordnung ein Auslösesignal erzeugt. Dieses Auslösesignal wird an das Setzgerät weitergeleitet und startet bzw. initiiert den nächsten Setzvorgang eines Befestigungselements BE.

Bei einer elektrischen Auslöseanordnung ist das Rad mit einer Lichtschranke, einem elektrischen oder magnetischen Impulsgeber oder allgemein mit einem oder mehreren elektrischen Schaltern ausgestattet. In Abhängigkeit von der vollständigen oder anteiligen Umdrehung des Rads wird dieser elektrische Schalter betätigt und ein Auslösesignal generiert. Dieses Auslösesignal wird wiederum an das Setzgerät weitergeleitet und startet bzw. initiiert den nächsten Setzvorgang eines Befestigungselements BE.

Der Rollfuß wird daher bevorzugt in Kombination mit einem Setzgerät eingesetzt, um die Niederhalterfunktion und/oder die Auslösefunktion zu realisieren. Er dient somit auch als Auslöseunterstützung, wenn das Setzgerät nicht am Werkstück angreifen soll. Somit lässt sich ein Verfahren zum Setzen von Befestigungselementen mit Hilfe eines Setzgeräts mit Rollfuß um die folgenden Schritte ergänzen: Aufsetzen und Abrollen des Rollfußes auf dem Bauteil mit oder ohne die Bauteile vorzuspannen und in Kombination mit einer Bewegung des Setzgeräts und Erzeugen eines Signals mit dem Rollfuß in Abhängigkeit von der Umdrehung des Rollfußes, das jeweils einen Setzvorgang initiiert, so dass die Umdrehung des Rollfußes die Fügeposition vorgibt.

Gemäß einer weiteren Verfahrensalternative werden Befestigungselemente BE mit den folgenden Verfahrensschritten gefügt. Die zu verbindenden Bauteile werden nicht mit dem Setzgerät oder einem separat bewegbaren Niederhalter sondern mit einer vom Setzgerät unabhängigen Spannkonstruktion vorgespannt. Nachfolgend wird das Setzgerät zu den zu verbindenden Bauteilen zugestellt. Diese Zustellung erfolgt bevorzugt mit Hilfe eines Roboters, um beispielsweise die Anzahl von Fügestellen gemäß einer Produktionsstrecke im Fahrzeugbau erzielen zu können. Das Zustellen des Setzgeräts erfolgt nur soweit in Richtung der zu verbindenden Bauteile, dass das Setzgerät nicht an einem der zu verbindenden Bauteile anliegt. Es wird somit ein Spalt zwischen den zu verbindenden Bauteilen und dem Setzgerät eingestellt, über den hinweg immer noch ein verlässliches Fügen der zu verbindenden Bauteile gewährleistet ist. Nachdem der Zustellvorgang des Setzgeräts abgeschlossen ist, wird an der jeweiligen Fügestelle ein Befestigungselement BE eingebracht. Mit diesem Verfahren ist es möglich, das Setzgerät über eine Mehrzahl von Fügestellen zu bewegen, ohne dass ein Niederhalter des Setzgeräts die zu verbindenden Bauteile berührt und vorspannt. Daher ist ebenfalls gewährleistet, dass eine Mehrzahl von Fügestellen mit höherer Geschwindigkeit im Vergleich zum Stand der Technik abfahrbar bzw. abarbeitbar ist. Zudem gewährleistet dieser Verfahrensablauf, dass das Einbringen der Befestigungselemente an der Mehrzahl von Fügestellen realisierbar ist, mit oder ohne das Bewegen des Setzgeräts an den Positionen der einzelnen Fügestellen zu unterbrechen. Somit führt auch dieses Verfahren zu einer Steigerung der Effektivität des Fügens von Befestigungselementen.

Gemäß einer bevorzugten Ausführungsform wird das Setzgerät mit Hilfe des Roboters ca. 4 mm über den mit einer Spanntechnik fixierten Flansch geführt und dabei das jeweilige Befestigungselement gesetzt.

## Patentansprüche

1. Zuführvorrichtung (1), mit der in einem Träger (10; 20) gehaltene Befestigungselemente, insbesondere Nieten, Bolzen, Nägel, einem Setzgerät zuführbar sind, während der Träger (10; 20) gleichmäßig beabstandete Haltepositionen (12) der Befestigungselemente aufweist und die Zuführvorrichtung die folgenden Merkmale umfasst:
a. ein Gehäuse mit einem Schlitten (30), der mit Hilfe eines pneumatisch betriebenen Kolben-Zylinder-Antriebs (40) linear in eine Vorschubposition (VP) und in eine Grundposition (GP) bewegbar ist, während der Schlitten (30) in der Vorschubposition (VP) federvorgespannt in Richtung der Grundposition (GP) ist, so dass durch die Federvorspannung der Schlitten (30) in die Grundposition (GP) bewegbar und der Träger (10; 20) um eine Halteposition (12) versetzbar ist,
b. einen Vorschubarm (32), dessen erstes Ende (32a) am Schlitten (30) schwenkbar befestigt ist und dessen zweites Ende (32b) am Träger (10; 20) angreift, so dass die Bewegung des Schlittens (30) auf den Träger (10; 20) übertragbar ist, wodurch ein Befestigungselement in eine Zufuhrposition (ZP) unterhalb eines Stempels (S) des Setzgeräts positionierbar ist, **gekennzeichnet durch**
c. einen Blockierarm (34), der schwenkbar am Gehäuse befestigt ist und derart am Träger (10; 20) angreift, dass eine Bewegung des Trägers (10; 20) während der Bewegung des Schlittens (30) aus der Grundposition (GP) in die Vorschubposition (VP) verhindert ist, während
d. der Träger (10; 20)
ein Streifenmagazin (10) mit jeweils einer widerhakenförmigen Struktur (14) an seinen gegenüberliegenden Längsseiten ist, wobei der Vorschubarm (32) in die eine und der Blockierarm (34) in die gegenüberliegende widerhakenförmige Struktur (14) einhakt, oder der Träger (10; 20)
ein ringförmiges Rotationsmagazin (20) ist mit jeweils einer widerhakenförmigen Struktur (24, 28) an seiner umfänglichen Außenfläche, in die der Vorschubarm (32) einhakt, und an seiner umfänglichen Innenfläche, in die der Blockierarm (34) einhakt.

2. Zuführvorrichtung (1) gemäß Anspruch 1, deren pneumatisch betriebener Kolben-Zylinder-Antrieb (40) getaktet und unabhängig von einer Bewegung des Stempels (S) des Setzgeräts betreibbar ist.

3. Zuführvorrichtung (1) gemäß einem der Ansprüche 1 oder 2, deren Streifenmagazin (10) hintereinander angeordnete Haltepositionen (12) oder deren ringförmiges Rotationsmagazin (20) in Umfangsrichtung des Rotationsmagazins (20) angeordnete Haltepositionen (22) aufweist.

4. Zuführvorrichtung (1) gemäß Anspruch 3, deren Streifenmagazin (10) mit Hilfe des Vorschubarms (32) nur in eine Richtung bewegbar ist.

5. Zuführvorrichtung (1) gemäß Anspruch 3 oder 4, die eine Führungsbahn (16) umfasst, in der das Streifenmagazin (10) seitlich geführt bewegbar ist.

6. Zuführvorrichtung (1) gemäß Anspruch 3, während an den Haltepositionen (22) des ringförmigen Rotationsmagazins (20) jeweils eine Kammer (26) vorgesehen ist, in denen lagerichtig jeweils ein Befestigungselement aufnehmbar ist.

7. Zuführvorrichtung (1) gemäß Anspruch 6, deren Rotationsmagazin (20) auf einer Platte (50) angeordnet ist, so dass die Kammern (26) durch die Platte (50) an einer Seite verschlossen sind, während an mindestens einer Zufuhrposition (ZP) die Platte (50) eine Öffnung (52) aufweist, durch die die Befestigungselemente aus der Kammer (26) abführbar sind.

8. Zuführvorrichtung (1) gemäß Anspruch 7, während die Öffnung (52) an der Zuführposition (ZP) der Platte (50) in Verbindung mit dem Zuführkanal (70) des Setzgeräts steht und der Stempel (S) des Setzgeräts durch die Öffnung (52) an der Zufuhrposition (ZP) bewegbar ist, um das Befestigungselement zu fügen.

9. Zuführvorrichtung (1) gemäß Anspruch 6, deren Rotationsmagazin (20) mit einer Deckplatte (60) abgedeckt ist, so dass die Kammern (26) durch die Deckplatte (60) an einer Oberseite des Rotationsmagazins (20) verschlossen sind, während an mindestens einer Ladeposition (LP) die Deckplatte (60) eine Öffnung (62) aufweist, durch die die Befestigungselemente der Kammer (26) zuführbar sind.

10. Zuführvorrichtung (1) gemäß Anspruch 3, 6, 7, 8 oder 9, deren Rotationsmagazin (20) mit Hilfe des Vorschubarms (32) in eine Richtung bewegbar ist.

11. Zuführvorrichtung (1) gemäß Anspruch 3, 6, 7, 8, 9 oder 10, wobei eine Bewegung des Rotationsmagazins (20) mit Hilfe des Blockiermittels (34) in eine Richtung verhindert ist.

12. Setzgerät, mit dem ein Befestigungselement (BE), insbesondere Nieten, Bolzen, Nägel, an einer Fügestelle einbringbar ist, und das eine Zuführvorrichtung (1) gemäß einem der Ansprüche 1 bis 11 aufweist.

13. Setzgerät nach Anspruch 12, das eine Niederhalteranordnung aufweist, die zwischen einer das Setzgerät tragenden Anordnung, vorzugsweise ein Roboter, und dem Setzgerät angeordnet ist, um eine Niederhaltefunktion des Setzgeräts zu realisieren und Reaktionskräfte des Setzgeräts während eines Setzens von Befestigungselementen (BE) gegenüber der tragenden Anordnung zu dämpfen.

14. Setzgerät nach Anspruch 13, dessen Niederhalteranordnung pneumatisch funktioniert und/oder mit der ein kraftgesteuertes Aufsetzen des Setzgeräts auf ein Werkstück realisierbar ist.

15. Verfahren zum Zuführen von Befestigungselementen (BE) in ein Setzgerät gemäß Anspruch 12, das die folgenden Schritte aufweist:
a. Laden eines ersten Befestigungselements (BE) an einer Ladeposition (LP) in einen Träger (20), insbesondere ein Rotationsmagazin,
b. Entladen eines zweiten Befestigungselements (BE) an einer Zufuhrposition (ZP) in einen Zuführkanal (70) des Setzgeräts, durch den das zweite Befestigungselement (BE) gefügt wird, während
c. das Laden und Entladen vorzugsweise gleichzeitig erfolgt.

16. Verfahren zum Fügen von Befestigungselement (BE), insbesondere Nieten, Bolzen, Nägel, mit einem Setzgerät gemäß Anspruch 12, das die folgenden Schritte aufweist:
a. Zustellen des Setzgerätes in Anlage mit einem der zu verbindenden Bauteile, so dass die zu verbindenden Bauteile ohne einen separat bewegten Niederhalter gegeneinander vorgespannt sind, und
b. Einbringen des Befestigungselements (BE) in die zu verbindenden Bauteile.

17. Verfahren gemäß Anspruch 16, in dem das Zustellen durch Bewegen des gesamten Setzgeräts mit Hilfe eines Roboters erfolgt, bis das Setzgerät über einen Niederhalter, insbesondere einen Zuführkanal (70), an einem der zu verbindenden Bauteile anliegt und diese vorspannt.

18. Verfahren gemäß einem der Ansprüche 16 oder 17 mit dem weiteren Schritt, Unterbrechen einer Verfahrbewegung zwischen mehreren Fügestellen an jeder Fügestelle, um das Befestigungselement einzubringen.

19. Verfahren gemäß Anspruch 16, das den weiteren Schritt aufweist:
Bewegen des Setzgeräts über eine Mehrzahl von Fügestellen, während der Niederhalter in Anlage mit einem der zu verbindenden Bauteile ist und die zu verbindenden Bauteile vorspannt, und
Einbringen der Befestigungselemente (BE) an der Mehrzahl von Fügestellen, ohne das Bewegen des Setzgeräts an den einzelnen Fügestellen zu unterbrechen.

20. Verfahren zum Fügen von Befestigungselementen, insbesondere Nieten, Bolzen, Nägel, mit einem Setzgerät gemäß Anspruch 12, das die folgenden Schritte aufweist:
a. Vorspannen einer Mehrzahl zu verbindender Bauteile mit einer vom Setzgerät unabhängigen Spannkonstruktion,
b. Zustellen des Setzgeräts zu den zu verbindenden Bauteilen, ohne dass das Setzgerät an einem der zu verbindenden Bauteile anliegt, und
c. Einbringen des Befestigungselements (BE) in die zu verbindenden Bauteile.

21. Verfahren gemäß Anspruch 20, das den weiteren Schritt aufweist:
Bewegen des Setzgeräts über eine Mehrzahl von Fügestellen, ohne dass ein Niederhalter des Setzgeräts die zu verbindenden Bauteile vorspannt, und
Einbringen der Befestigungselemente (BE) an der Mehrzahl von Fügestellen, mit oder ohne das Bewegen des Setzgeräts an den einzelnen Fügestellen zu unterbrechen.

## Claims

1. A feed apparatus (1) with which fastening elements especially rivets, bolts, nails, held in a carrier (10; 20), can be fed to a setting device, where the carrier (10; 20) has uniformly spaced retaining positions (12) of the fastening elements, and the feed apparatus comprises the following features:
a. a housing with a slide (30), which can be moved linearly using a pneumatically operated piston cylinder drive (40) into an advance position (VP) and a home position (GP), where the slide (30) in the advance position (VP) is spring biased in the direction of the home position (GP), so that the slide (30) can be moved into the home position (GP) by the spring bias, and the carrier (10; 20) can be moved by one retaining position (12),
b. an advance arm (32), whose first end (32a) is fastened pivotably to the slide (30), and whose second end (32b) engages at the carrier (10; 20) such that the movement of the slide (30) can be transferred to the carrier (10; 20), whereby a fastening element can be positioned into a feed position (ZP) beneath a punch (S) of the setting device, **characterized by**
c. a blocking arm (34) that is fastened pivotably to the housing and engages at the carrier (10; 20) in such a way that a movement of the carrier (10; 20) is prevented during the movement of the slide (30) from the home position (GP) into the advance position (VP), where
d. the carrier (10; 20)
is a strip magazine (10) with, in each case, a barb shaped structure (14) at its opposing longitudinal sides, wherein the advance arm (32) hooks into one barb shaped structure (14) and the blocking arm (34) hooks into the opposing barb shaped structure (14), or the carrier (10; 20) is a ring shaped rotary magazine (20) with, in each case, a barb shaped structure (24, 28) at its peripheral outer surface, in which the advance arm (32) hooks, and at its peripheral inner surface, in which the blocking arm (34) hooks.

2. The feed apparatus (1) according to Claim 1, whose pneumatically operated piston cylinder drive (40) is synchronized, and can be operated independently of a movement of the punch (S) of the setting device.

3. The feed apparatus (1) according to one of the Claims 1 or 2, whose strip magazine (10) has retaining positions (12) disposed in a row, or whose ring shaped rotary magazine (20) has retaining positions (22) disposed in the periphery of the rotary magazine (20).

4. The feed apparatus (1) according to Claim 3, whose strip magazine (10) can be moved only in one direction using the advance arm (32).

5. The feed apparatus (1) according to Claim 3 or 4, which comprises a guideway (16), in which the strip magazine (10) can be guided laterally.

6. The feed apparatus (1) according to Claim 3, where at the retaining positions (22) of the ring shaped rotary magazine (20) a chamber (26) is provided in each case, in each of which a fastening element can be received in correct positional orientation.

7. The feed apparatus (1) according to Claim 6, whose rotary magazine (20) is disposed on a plate (50) so that the chambers (26) are closed by the plate (50) on one side, whereas the plate (50) has on at least one feed position (ZP) an opening (52) through which the fastening elements can be discharged from the chamber (26).

8. The feed apparatus (1) according to Claim 7, where the opening (52) at the feed position (52) of the plate (50) is connected to the feed channel (70) of the setting device, and the punch (S) of the setting device can be moved through the opening (52) at the feed position (ZP), in order to join the fastening element.

9. The feed apparatus (1) according to Claim 6, whose rotary magazine (20) is covered with a cover plate (60) so that the chambers (26) are closed by the cover plate (60) on a top side of the rotary magazine (20), whereas the cover plate (60) has on at least one loading position (LP) an opening (62) through which the fastening elements can be fed into the chamber (26).

10. The feed apparatus (1) according to Claim 3, 6, 7, 8 or 9, whose rotary magazine (20) can be moved in one direction using the advance arm (32).

11. The feed apparatus (1) according to Claim 3, 6, 7, 8, 9 or 10, wherein a movement of the rotary magazine (20) in one direction can be prevented using the blocking means (34).

12. A setting device with which a fastening element (BE), in particular rivets, bolts, nails, can be inserted at a join location, and that has a feed apparatus (1) according to any of the claims 1 to 11.

13. The setting device according to Claim 12, which has a hold-down arrangement, which is disposed between an arrangement supporting the setting device, preferably a robot, and the setting device, in order to implement a hold-down function of the setting device and to dampen reaction forces of the setting device directed at the supporting arrangement during a setting of fastening elements (BE).

14. The setting device according to Claim 13, whose hold-down arrangement functions pneumatically and/or with which a force controlled placement of the setting device on a work piece can be implemented.

15. A method for feeding fastening elements (BE) into a setting device according to claim 12 which has the following steps:
a. loading a first fastening element (BE) at a loading position (LP) into a carrier (20), in particular a rotary magazine,
b. unloading a second fastening element (BE) at a feed position (ZP) into a feed channel (70) of the setting device, through which the second fastening element (BE) is joined, where
c. the loading and unloading preferably occurs simultaneously.

16. A method for joining fastening elements (BE), in particular rivets, bolts, nails, with a setting device according to Claim 12 which has the following steps:
a. advancing the setting device into contact with one of the components to be connected so that the components to be connected are preloaded against each other without a separately moved hold-down device, and
b. inserting the fastening element (BE) into the components to be connected.

17. The method according to Claim 16, in which the advancement occurs by moving the entire setting device using a robot, until the setting device contacts one of the components to be connected and preloads it using a hold-down device, especially a feed channel (70).

18. The method according to Claim 16 or 17, with the further step, interrupting a travel movement between multiple join locations at each join location in order to insert the fastening element.

19. The method according to Claim 16, which has the further step:
moving the setting device over a plurality of join locations where the hold-down device is in contact with one of the components to be joined, and preloads the components to be joined, and
inserting the fastening element (BE) at the plurality of join locations, without interrupting the movement of the setting device at the individual join locations.

20. A method for joining fastening elements, in particular rivets, bolts, nails, with a setting device according to Claim 12 which has the following steps:
a. preloading a plurality of components to be connected with a preloading construction independent of the setting device,
b. advancing the setting device to the components to be connected without the setting device contacting one of the components to be connected, and
c. inserting the fastening element (BE) into the components to be connected.

21. The method according to Claim 20, which has the further step:
moving the setting device over a plurality of join locations without a hold-down device of the setting device preloading the components to be connected, and
inserting the fastening elements (BE) at the plurality of join locations, with or without interrupting the movement of the setting device at the individual join locations.

## Revendications

1. Dispositif d'alimentation (1), avec lequel des éléments de fixation retenus dans un support (10 ; 20), en particulier des rivets, des boulons, des clous, peuvent être conduits à un appareil de placement, le support (10 ; 20) présentant des positions de retenue (12) des éléments de fixation espacées régulièrement, et le dispositif d'alimentation comprenant les caractéristiques suivantes :
a. un carter avec un chariot (30) qui, à l'aide d'un entraînement piston-cylindre (40) actionné de façon pneumatique, est mobile de façon linéaire vers une position d'avance (VP) et vers une position de base (GP), le chariot (30) dans la position d'avance (VP) étant prétendu par ressort dans la direction de la position de base (GP) de sorte que, du fait de la prétension par ressort, le chariot (30) est mobile vers la position de base (GP), et le support (10 ; 20) peut être déplacé d'une position de retenue (12),
b. un bras d'avance (32) dont la première extrémité (32a) est fixée de façon pivotante sur le chariot (30) et dont la deuxième extrémité (32b) s'agrippe sur le support (10 ; 20) de sorte que le mouvement du chariot (30) peut être transmis au support (10 ; 20), ce qui fait qu'un élément de fixation peut être positionné dans une position d'alimentation (ZP) au-dessous d'un poinçon (S) de l'appareil de placement, **caractérisé par**
c. un bras de blocage (34) qui est fixé de façon pivotante sur le carter et qui s'agrippe au support (10 ; 20) de sorte qu'un mouvement du support (10 ; 20) pendant le mouvement du chariot (30) à partir de la position de base (GP) vers la position d'avance (VP) est empêché,
d. le support (10; 20)
étant un magasin à bande (10) avec respectivement une structure en forme de barbillon sur ses côtés longitudinaux opposés, le bras d'avance (32) s'accrochant dans une structure en forme de barbillon, et le bras de blocage (34) s'accrochant dans la structure (14) en forme de barbillon opposée, ou le support (10 ; 20)
étant un magasin rotatif annulaire (20) avec respectivement une structure en forme de barbillon (24, 28) sur sa surface extérieure circonférentielle dans laquelle s'accroche le bras d'avance (32), et sur sa surface intérieure circonférentielle dans laquelle s'accroche le bras de blocage (34).

2. Dispositif d'alimentation (1) selon la revendication 1, dont l'entraînement piston-cylindre (40) entraîné de façon pneumatique est cadencé et peut être actionné indépendamment d'un mouvement du poinçon (S) de l'appareil de placement.

3. Dispositif d'alimentation (1) selon une des revendications 1 ou 2, dont le magasin à bande (10) présente des positions de retenue (12) disposées les unes derrière les autres ou dont le magasin rotatif (20) annulaire présente des positions de retenue (12) disposées dans la direction circonférentielle du magasin rotatif (20).

4. Dispositif d'alimentation (1) selon la revendication 3, dont le magasin à bande (10) n'est mobile que dans une direction à l'aide du bras d'avance (32).

5. Dispositif d'alimentation (1) selon la revendication 3 ou 4, qui comprend une voie de guidage (16) dans laquelle le magasin à bande (10) est mobile, guidé latéralement.

6. Dispositif d'alimentation (1) selon la revendication 3, une chambre (26) étant prévue sur les positions de retenue (22) du magasin rotatif (20) annulaire dans lesquelles un élément de fixation peut respectivement être logé en bonne position.

7. Dispositif d'alimentation (1) selon la revendication 6, dont le magasin rotatif (20) est disposé sur une plaque (50) de sorte que les chambres (26) sont fermées par la plaque (50) sur un côté, la plaque (50) présentant, sur au moins une position d'alimentation (ZP), une ouverture (52) à travers laquelle les éléments de fixation peuvent être extraits de la chambre (26).

8. Dispositif d'alimentation (1) selon la revendication 7, l'ouverture (52) étant, sur la position d'alimentation (ZP) de la plaque (50), en liaison avec le canal d'alimentation (70) de l'appareil de placement, et le poinçon (S) de l'appareil de placement étant mobile à travers l'ouverture (52) sur la position d'alimentation (ZP) pour assembler l'élément de fixation.

9. Dispositif d'alimentation (1) selon la revendication 6, dont le magasin rotatif (20) est couvert d'une plaque de couverture (60) de sorte que les chambres (26) sont fermées par la plaque de couverture (60) sur un côté supérieur du magasin rotatif (20), la plaque de couverture (60) présentant, sur au moins une position de charge (LP), une ouverture (62) à travers laquelle les éléments de fixation de la chambre (26) peuvent être conduits.

10. Dispositif d'alimentation (1) selon la revendication 3, 6, 7, 8 ou 9, dont le magasin rotatif (20) est mobile dans une direction à l'aide du bras d'avance (32).

11. Dispositif d'alimentation (1) selon la revendication 3, 6, 7, 8, 9 ou 10, un mouvement du magasin rotatif (20) étant empêché dans une direction à l'aide du moyen de blocage (34).

12. Appareil de placement, avec lequel un élément de fixation (BE), en particulier des rivets, des boulons, des clous, peut être mis en place sur un emplacement d'assemblage, et qui présente un dispositif d'alimentation (1) selon une des revendications 1 à 11.

13. Appareil de placement selon la revendication 12, qui présente un dispositif de serre-flan qui est disposé entre un dispositif supportant l'appareil de placement, de préférence un robot, et l'appareil de placement afin de réaliser une fonction de serre-flan de l'appareil de placement et d'amortir des forces de réaction de l'appareil de placement pendant un placement d'éléments de fixation (BE) par rapport au dispositif.

14. Appareil de placement selon la revendication 13, dont le dispositif de serre-flan fonctionne de façon pneumatique et/ou avec lequel une pose servocommandée de l'appareil de placement sur une pièce est réalisable.

15. Procédé de fourniture d'éléments de fixation (BE) dans un appareil de placement selon la revendication 12, qui présente les étapes suivantes :
a. chargement d'un premier élément de fixation (BE) sur une position de charge (LP) dans un support (20), en particulier un magasin rotatif,
b. déchargement d'un deuxième élément de fixation (BE) sur une position d'alimentation (ZP) dans un canal d'alimentation (70) de l'appareil de placement, à travers lequel le deuxième élément de fixation (BE) est assemblé,
c. le chargement et le déchargement s'effectuant de préférence simultanément.

16. Procédé d'assemblage d'éléments de fixation (BE), en particulier de rivets, de boulons, de clous, avec un appareil de placement selon la revendication 12, qui présente les étapes suivantes :
a. mise en approche de l'appareil de placement en appui sur un des composants à raccorder de sorte que les composants à raccorder sont prétendus l'un contre l'autre sans serre-flan déplacé séparément, et
b. mise en place de l'élément de fixation (BE) dans les composants à raccorder.

17. Procédé selon la revendication 16, dans lequel la mise en approche s'effectue par la mise en mouvement de l'ensemble de l'appareil de placement au moyen d'un robot, jusqu'à ce que l'appareil de placement appuie, par le biais d'un serre-flan, en particulier d'un canal d'alimentation (70), contre un des composants à raccorder et les soumette à une prétension.

18. Procédé selon une des revendications 16 ou 17, avec l'étape supplémentaire, l'interruption d'un mouvement de déplacement entre plusieurs endroits d'assemblage au niveau de chaque endroit d'assemblage, pour mettre en place l'élément de fixation.

19. Procédé selon la revendication 16, qui présente l'étape supplémentaire :
déplacement de l'appareil de placement sur une multiplicité d'endroits d'assemblage, le serre-flan étant en appui contre un des composants à raccorder et soumettant à une prétension les composants à raccorder, et
mise en place des éléments de fixation (BE) au niveau de la multiplicité d'endroits d'assemblage sans interrompre la mise en mouvement de l'appareil de placement sur les différents endroits d'assemblage.

20. Procédé d'assemblage d'éléments de fixation, en particulier de rivets, boulons, clous, avec un appareil de placement selon la revendication 12 qui présente les étapes suivantes :
a. prétension d'une multiplicité de composants à raccorder avec une construction de serrage indépendante de l'appareil de placement,
b. mise en approche de l'appareil de placement vers les composants à raccorder sans que l'appareil de placement appuie contre un des composants à raccorder, et
c. mise en place de l'appareil de placement (BE) dans les composants à raccorder.

21. Procédé d'assemblage selon la revendication 20, qui présente l'étape supplémentaire :
mise en mouvement de l'appareil de placement sur une multiplicité d'endroits d'assemblage sans qu'un serre-flan de l'appareil de placement ne soumette à une prétension les composants à raccorder, et
mise en place des éléments de fixation (BE) au niveau de la multiplicité d'endroits d'assemblage, avec ou sans interruption du déplacement de l'appareil de placement au niveau des différents endroits d'assemblage.
